(19) Europäisches Patentamt
European Patent Office
Office européen des brevets

(11) EP 4 365 271 A1

(12) # EUROPEAN PATENT APPLICATION
published in accordance with Art. 153(4) EPC

(43) Date of publication:
**08.05.2024 Bulletin 2024/19**

(21) Application number: **22833296.1**

(22) Date of filing: **30.06.2022**

(51) International Patent Classification (IPC):
***C12C 5/02*** *(2006.01)* ***C12C 11/11*** *(2019.01)*
***C12G 3/04*** *(2019.01)* ***A23L 11/65*** *(2021.01)*
***A23L 2/52*** *(2006.01)* ***A23L 5/00*** *(2016.01)*

(52) Cooperative Patent Classification (CPC):
**A23L 2/52; A23L 5/00; A23L 11/65; C12C 5/02; C12C 11/11; C12G 3/04**

(86) International application number:
**PCT/JP2022/026326**

(87) International publication number:
**WO 2023/277150 (05.01.2023 Gazette 2023/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.06.2021 JP 2021109249**
**30.06.2021 JP 2021109250**

(71) Applicant: **Suntory Holdings Limited**
**Osaka 530-8203 (JP)**

(72) Inventors:
- **MIZUGUCHI Ikuma**
**Fuchu-shi, Tokyo 183-8533 (JP)**
- **TANIKAWA Tsubasa**
**Mishima-gun, Osaka 618-0001 (JP)**
- **KATO Yuichi**
**Fuchu-shi, Tokyo 183-8533 (JP)**
- **SHIMIZU Yohei**
**Fuchu-shi, Tokyo 183-8533 (JP)**

(74) Representative: **Vossius & Partner Patentanwälte Rechtsanwälte mbB**
**Siebertstrasse 3**
**81675 München (DE)**

(54) **METHOD OF PRODUCING PROCESSED FOOD**

(57) Provided is a method of producing a processed food, the method including (a) adding a food composition having xanthine oxidase activity to a raw material containing purines.

EP 4 365 271 A1

## Description

Technical Field

The present invention relates to a method of producing a processed food.

Background Art

In recent years, a health consciousness trend is driving demand for processed foods with a lowered content of purines. Purines are considered to be a cause of gout. Examples of processed foods known to contain a large amount of purines include beer-taste beverages. As described in Patent Document 1, development of beer-taste beverages with a lowered purine content is now being conducted.

Citation List

Patent Literature

Patent Document 1: JP 2018-64503 A

Summary of Invention

Technical Problem

Under such circumstances, a method of producing a processed food, which is capable of efficiently lowering a purine content, is in demand.

Solution to Problem

The present invention provides a method of producing a processed food, the method including adding a food composition having xanthine oxidase activity to a raw material containing purines. Specifically, the present invention provides the following embodiments [1] to [11].

[1] A method of producing a processed food, the method including: (a) adding a food composition having xanthine oxidase activity to a raw material containing purines.
[2] The method of producing a processed food according to [1] above, wherein the food composition has a xanthine oxidase activity value of 0.1 U or more.
[3] The method of producing a processed food according to [1] or [2] above, further including: (a1) adding a food composition having uricase activity, simultaneously with step (a) and/or after step (a).
[4] The method of producing a processed food according to any one of [1] to [3] above, wherein the food composition is a purine-lowering agent for food.
[5] The method of producing a processed food according to any one of [1] to [4] above, wherein the processed food has a xanthine oxidase activity of 0.1 U or more.
[6] The method of producing a processed food according to any one of [1] to [5] above, wherein the processed food is a beverage.
[7] The method of producing a processed food according to any one of [1] to [5] above, wherein

the processed food is a beer-taste beverage,
the method includes:

(1) performing at least one treatment of saccharification treatment, boiling treatment, or solid content removal treatment on the raw material to obtain a pre-fermentation liquid;
(2) cooling the pre-fermentation liquid obtained in step (1) to obtain a cooled pre-fermentation liquid; and
(3) adding yeast to the cooled pre-fermentation liquid obtained in step (2) to perform alcoholic fermentation; and wherein
step (a) is performed at least before step (1), simultaneously with one or more steps of steps (1) to (3), between two steps selected from steps (1) to (3), or after step (3).

[8] A processed food produced by the production method described in any one of [1] to [7] above.

[9] A food composition having a xanthine oxidase activity of 0.1 U or more.

[10] A food composition having at least one of xanthine oxidase activity or uricase activity.

[11] The food composition according to [9] or [10] above, wherein the food composition is a purine-lowering agent for food.

[12] The food composition according to any one of [9] to [11] above, wherein the food composition is for use in production of a processed food.

[13] The food composition according to any one of [9] to [12] above, wherein the food composition is for use in production of a uric acid-containing processed food.

[14] A method of use, including applying the food composition described in any one of [9] to [13] above in production of a uric acid-containing processed food.

[15] A method of lowering a purine content in a processed food, the method including adding a food composition having xanthine oxidase activity to convert xanthine into uric acid, thereby lowering a content of purines, in a production process of a processed food.

[16] A method of lowering a purine content in a processed food, the method including adding a food composition having xanthine oxidase activity and a food composition having uricase activity to convert xanthine into uric acid and further convert uric acid into allantoin, thereby lowering a content of purines, in a production process of a processed food.

## Advantageous Effects of Invention

The method of producing a processed food according to a suitable embodiment of the present invention can efficiently lower the purine content and can produce a processed food with a lowered purine content.

## Description of Embodiments

### 1. Method of producing processed food

A method of producing a processed food of the present invention includes (a) adding a food composition having xanthine oxidase activity to a raw material containing purines.

In production of processed foods, purine-rich raw materials can impart a peculiar flavor to processed foods and thus are used in various processed foods.

In the present specification, the "purines" refers to compounds having a purine nucleus structure, and specific examples include purine bases (adenine, guanine, xanthine, and hypoxanthine), purine nucleosides (adenosine, guanosine, and inosine), purine nucleotides (adenylic acid, guanylic acid, and inosinic acid), and low-molecular-weight or high-molecular-weight nucleic acids (oligonucleotides and polynucleotides).

The raw material containing purines is not particularly limited, but examples include grains, such as barley and the like (such as barley, wheat, rye, wild oats, oats, and adlay), rice (such as white rice and brown rice), corn, kaoliang, potatoes, legumes (such as soybeans and peas), buckwheat, sorghum, foxtail millet, and Japanese millet; vegetables (such as spinach, cauliflower, broccoli, bean sprouts, white radish sprouts, okra, fava beans, and green peas); mushrooms (such as maitake mushroom, shiitake mushroom, nameko mushroom, enoki mushroom, button mushroom, and oyster mushroom), legumes (soybeans, adzuki beans, peanuts, fava beans, and green soybeans), bean products (such as tofu, soy milk, miso, soy sauce, okara (soy pulp), and natto (fermented soybeans)), pork, chicken, beef, mutton, whale meat, meat products (ham, sausage, bacon, salami, corned beef, and liver paste), fish meat (such as skipjack tuna, tuna, chicken grunt, Japanese Spanish mackerel, Japanese whiting, flying fish, rainbow trout, red barracuda, red sea bream, left-eyed flounder, herring, horse mackerel, greenling, mackerel, tilefish, yellowtail, salmon, ayu (sweet fish), Japanese sea bass, rockfish, sardine, saury, carp, right-eyed flounder, loach, Japanese surfsmelt, eel, Japanese sandfish, and anglerfish), fish roe or fish roe products (cod roe, spicy cod roe, sujiko (salmon roe in the sac), herring roe, and ikura (salmon roe)), squid, octopus, shrimp, krill, crab, shellfish (such as Japanese littleneck clam, oyster, clam, and scallop), dried fish, processed fish products (such as fish meatballs, chikuwa (grilled tube-shaped fish paste), kamaboko (steamed fish paste), naruto (a boiled fish paste with a pink spiral pattern), fish sausage, and satsuma-age (fried fish paste)), almonds, green juice powder, yeast, chlorella, euglena, and royal jelly.

With the use of these raw materials containing purines in production of processed foods, processed foods with improved flavor are produced, but the processed foods also contain purines.

Meanwhile, health consciousness trend in recent years is driving demand for processed foods with lowered content of purines. For the means to lower the content of purines in processed foods, for example, the following means (i) to (iii) are known.

(i): A means to produce a processed food using an alternative raw material, such as a raw material containing no

purines or a raw material with a low content of purines, in place of a purine-rich raw material.

(ii): A means to physically remove purines by performing such a treatment as addition of a purine adsorbent and/or membrane filtration, in a production process of a processed food.

(iii): A means including, when the processed food is a fermented processed food, degrading a yeast-non-assimilable purine, such as adenosine or guanosine, into an assimilable purine using an enzyme, such as purine nucleosidase, and lowering the assimilable purine content by fermentation.

However, for the means (i), the flavor of the alternative raw material is inferior to that of a purine-rich raw material, thus leading to a problem of deterioration in the flavor of the processed food produced.

In addition, a means to physically remove purines, such as the means (ii), is also likely to cause deterioration in the flavor of the processed food. For example, employing the means (ii) to remove purines in a beer-taste beverage can lower the content of flavor components (esters and alcohols) and the content of bittering components (such as iso-$\alpha$-acid and $\alpha$-acid) peculiar to beer. Furthermore, the means (ii) removes only a small amount of purines. Thus, using a large proportion of a purine-rich raw material would result in a processed food with a large amount of residual purines.

On the other hand, the means (iii) can suppress the problem of flavor deterioration of the processed food, which may occur in the means (i) and (ii). In addition, for example, in a production process of a processed food involving a fermentation step, a yeast-assimilable purine can be reduced by the fermentation step using yeast. Adenosine and guanosine, which are yeast-non-assimilable purines, can be converted into yeast-assimilable purines by enzymatic treatment with purine nucleosidase. However, enzymatic treatment with purine nucleosidase may increase xanthine, which is a non-assimilable purine, by yeast metabolism in the fermentation process. In addition, the amount of the assimilable purine lowered by yeast also has a limit.

Thus, there is a demand for a method of producing a processed food, the method being capable of lowering the purine content without flavor deterioration of a processed food.

To solve such problems, the method of producing a processed food of the present invention includes: (a) adding a food composition having xanthine oxidase activity to a raw material containing purines.

As described above, the "purines" are compounds having a purine nucleus structure. Here, xanthine oxidase is one of xanthine oxidoreductase-type enzymes, which generate reactive oxygen species. Xanthine oxidase can catalyzes the oxidation of xanthine to uric acid, and can catalyzes the oxidation of hypoxanthine to xanthine and xanthine to uric acid. That is, with the use of a raw material having xanthine oxidase activity, xanthine and hypoxanthine constituting purines and contained in the raw material can be converted into uric acid, and the content of purines contained in a processed food produced can be lowered.

The content of purines in the processed food produced through step (a) is preferably less than 25.0 μg/g, 22.0 μg/g or less, 21.9 μg/g or less, 21.8 μg/g or less, 21.7 μg/g or less, 21.6 μg/g or less, 21.5 μg/g or less, 21.4 μg/g or less, 21.3 μg/g or less, 21.2 μg/g or less, 21.1 μg/g or less, 21.0 μg/g or less, 20.9 μg/g or less, 20.8 μg/g or less, 20.7 μg/g or less, 20.6 μg/g or less, 20.5 μg/g or less, 20.4 μg/g or less, 20.3 μg/g or less, 20.2 μg/g or less, 20.1 μg/g or less, 20.0 μg/g or less, less than 20.0 μg/g, 19.9 μg/g or less, 19.8 μg/g or less, 19.7 μg/g or less, 19.6 μg/g or less, 19.5 μg/g or less, 19.4 μg/g or less, 19.3 μg/g or less, 19.2 μg/g or less, 19.1 μg/g or less, 19.0 μg/g or less, 18.9 μg/g or less, 18.8 μg/g or less, 18.7 μg/g or less, 18.6 μg/g or less, 18.5 μg/g or less, 18.4 μg/g or less, 18.3 μg/g or less, 18.2 μg/g or less, 18.1 μg/g or less, 18.0 μg/g or less, 17.9 μg/g or less, 17.8 μg/g or less, 17.7 μg/g or less, 17.6 μg/g or less, 17.5 μg/g or less, 17.4 μg/g or less, 17.3 μg/g or less, 17.2 μg/g or less, 17.1 μg/g or less, 17.0 μg/g or less, 16.9 μg/g or less, 16.8 μg/g or less, 16.7 μg/g or less, 16.6 μg/g or less, 16.5 μg/g or less, 16.4 μg/g or less, 16.3 μg/g or less, 16.2 μg/g or less, 16.1 μg/g or less, 16.0 μg/g or less, 15.9 μg/g or less, 15.8 μg/g or less, 15.7 μg/g or less, 15.6 μg/g or less, 15.5 μg/g or less, 15.4 μg/g or less, 15.3 μg/g or less, 15.2 μg/g or less, 15.1 μg/g or less, 15.0 μg/g or less, 14.9 μg/g or less, 14.8 μg/g or less, 14.7 μg/g or less, 14.6 μg/g or less, 14.5 μg/g or less, 14.4 μg/g or less, 14.3 μg/g or less, 14.2 μg/g or less, 14.1 μg/g or less, 14.0 μg/g or less, 13.9 μg/g or less, 13.8 μg/g or less, 13.7 μg/g or less, 13.6 μg/g or less, 13.5 μg/g or less, 13.4 μg/g or less, 13.3 μg/g or less, 13.2 μg/g or less, 13.1 μg/g or less, 13.0 μg/g or less, 12.9 μg/g or less, 12.8 μg/g or less, 12.7 μg/g or less, 12.6 μg/g or less, 12.5 μg/g or less, 12.4 μg/g or less, 12.3 μg/g or less, 12.2 μg/g or less, 12.1 μg/g or less, 12.0 μg/g or less, 11.9 μg/g or less, 11.8 μg/g or less, 11.7 μg/g or less, 11.6 μg/g or less, 11.5 μg/g or less, 11.4 μg/g or less, 11.3 μg/g or less, 11.2 μg/g or less, 11.1 μg/g or less, 11.0 μg/g or less, 10.9 μg/g or less, 10.8 μg/g or less, 10.7 μg/g or less, 10.6 μg/g or less, 10.5 μg/g or less, 10.4 μg/g or less, 10.3 μg/g or less, 10.2 μg/g or less, 10.1 μg/g or less, 10.0 μg/g or less, less than 10.0 μg/g, 9.9 μg/g or less, 9.8 μg/g or less, 9.7 μg/g or less, 9.6 μg/g or less, 9.5 μg/g or less, 9.4 μg/g or less, 9.3 μg/g or less, 9.2 μg/g or less, 9.1 μg/g or less, 9.0 μg/g or less, 8.9 μg/g or less, 8.8 μg/g or less, 8.7 μg/g or less, 8.6 μg/g or less, 8.5 μg/g or less, 8.4 μg/g or less, 8.3 μg/g or less, 8.2 μg/g or less, 8.1 μg/g or less, 8.0 μg/g or less, 7.9 μg/g or less, 7.8 μg/g or less, 7.7 μg/g or less, 7.6 μg/g or less, 7.5 μg/g or less, 7.4 μg/g or less, 7.3 μg/g or less, 7.2 μg/g or less, 7.1 μg/g or less, 7.0 μg/g or less, 6.9 μg/g or less, 6.8 μg/g or less, 6.7 μg/g or less, 6.6 μg/g or less, 6.5 μg/g or less, 6.4 μg/g or less, 6.3 μg/g or less, 6.2 μg/g or less, 6.1 μg/g or less, 6.0 μg/g or less, 5.9 μg/g or less, 5.8 μg/g or less, 5.7 μg/g or less, 5.6 μg/g or less, 5.5 μg/g or less, 5.4 μg/g or less, 5.3 μg/g or less, 5.2 μg/g or less, 5.1 μg/g or less, 5.0 μg/g

or less, less than 5.0 μg/g, 4.9 μg/g or less, 4.8 μg/g or less, 4.7 μg/g or less, 4.6 μg/g or less, 4.5 μg/g or less, 4.4 μg/g or less, 4.3 μg/g or less, 4.2 μg/g or less, 4.1 μg/g or less, 4.0 μg/g or less, 3.9 μg/g or less, 3.8 μg/g or less, 3.7 μg/g or less, 3.6 μg/g or less, 3.5 μg/g or less, 3.4 μg/g or less, 3.3 μg/g or less, 3.2 μg/g or less, 3.1 μg/g or less, 3.0 μg/g or less, less than 3.0 μg/g, 2.9 μg/g or less, 2.8 μg/g or less, 2.7 μg/g or less, 2.6 μg/g or less, 2.5 μg/g or less, 2.4 μg/g or less, 2.3 μg/g or less, 2.2 μg/g or less, 2.1 μg/g or less, 2.0 μg/g or less, 1.9 μg/g or less, 1.8 μg/g or less, 1.7 μg/g or less, 1.6 μg/g or less, 1.5 μg/g or less, 1.4 μg/g or less, 1.3 μg/g or less, 1.2 μg/g or less, 1.1 μg/g or less, 1.0 μg/g or less, 0.9 μg/g or less, 0.8 μg/g or less, 0.7 μg/g or less, 0.6 μg/g or less, 0.5 μg/g or less, 0.4 μg/g or less, 0.3 μg/g or less, or 0.2 μg/g or less, and the content may be more than 0.0 μg/g, 0.01 μg/g or more, 0.05 μg/g or more, 0.1 μg/g or more, 0.2 μg/g or more, 0.3 μg/g or more, 0.4 μg/g or more, 0.5 μg/g or more, 0.6 μg/g or more, 0.7 μg/g or more, 0.8 μg/g or more, 0.9 μg/g or more, 1.0 μg/g or more, 1.1 μg/g or more, 1.2 μg/g or more, 1.3 μg/g or more, 1.4 μg/g or more, 1.5 μg/g or more, 1.6 μg/g or more, 1.7 μg/g or more, 1.8 μg/g or more, 1.9 μg/g or more, 2.0 μg/g or more, 2.1 μg/g or more, 2.2 μg/g or more, 2.3 μg/g or more, 2.4 μg/g or more, 2.5 μg/g or more, 2.6 μg/g or more, 2.7 μg/g or more, 2.8 μg/g or more, 2.9 μg/g or more, 3.0 μg/g or more, 3.1 μg/g or more, 3.2 μg/g or more, 3.3 μg/g or more, 3.4 μg/g or more, 3.5 μg/g or more, 3.6 μg/g or more, 3.7 μg/g or more, 3.8 μg/g or more, 3.9 μg/g or more, 4.0 μg/g or more, 4.1 μg/g or more, 4.2 μg/g or more, 4.3 μg/g or more, 4.4 μg/g or more, 4.5 μg/g or more, 4.6 μg/g or more, 4.7 μg/g or more, 4.8 μg/g or more, 4.9 μg/g or more, 5.0 μg/g or more, 5.1 μg/g or more, 5.2 μg/g or more, 5.3 μg/g or more, 5.4 μg/g or more, 5.5 μg/g or more, 5.6 μg/g or more, 5.7 μg/g or more, 5.8 μg/g or more, 5.9 μg/g or more, 6.0 μg/g or more, 6.1 μg/g or more, 6.2 μg/g or more, 6.3 μg/g or more, 6.4 μg/g or more, 6.5 μg/g or more, 6.6 μg/g or more, 6.7 μg/g or more, 6.8 μg/g or more, 6.9 μg/g or more, 7.0 μg/g or more, 7.1 μg/g or more, 7.2 μg/g or more, 7.3 μg/g or more, 7.4 μg/g or more, 7.5 μg/g or more, 7.6 μg/g or more, 7.7 μg/g or more, 7.8 μg/g or more, 7.9 μg/g or more, 8.0 μg/g or more, 8.1 μg/g or more, 8.2 μg/g or more, 8.3 μg/g or more, 8.4 μg/g or more, 8.5 μg/g or more, 8.6 μg/g or more, 8.7 μg/g or more, 8.8 μg/g or more, 8.9 μg/g or more, 9.0 μg/g or more, 9.1 μg/g or more, 9.2 μg/g or more, 9.3 μg/g or more, 9.4 μg/g or more, 9.5 μg/g or more, 9.6 μg/g or more, 9.7 μg/g or more, 9.8 μg/g or more, 9.9 μg/g or more, 10.0 μg/g or more, 10.1 μg/g or more, 10.2 μg/g or more, 10.3 μg/g or more, 10.4 μg/g or more, 10.5 μg/g or more, 10.6 μg/g or more, 10.7 μg/g or more, 10.8 μg/g or more, 10.9 μg/g or more, 11.0 μg/g or more, 11.1 μg/g or more, 11.2 μg/g or more, 11.3 μg/g or more, 11.4 μg/g or more, 11.5 μg/g or more, 11.6 μg/g or more, 11.7 μg/g or more, 11.8 μg/g or more, 11.9 μg/g or more, 12.0 μg/g or more, 12.1 μg/g or more, 12.2 μg/g or more, 12.3 μg/g or more, 12.4 μg/g or more, 12.5 μg/g or more, 12.6 μg/g or more, 12.7 μg/g or more, 12.8 μg/g or more, 12.9 μg/g or more, 13.0 μg/g or more, 13.1 μg/g or more, 13.2 μg/g or more, 13.3 μg/g or more, 13.4 μg/g or more, 13.5 μg/g or more, 13.6 μg/g or more, 13.7 μg/g or more, 13.8 μg/g or more, 13.9 μg/g or more, 14.0 μg/g or more, 14.1 μg/g or more, 14.2 μg/g or more, 14.3 μg/g or more, 14.4 μg/g or more, 14.5 μg/g or more, 14.6 μg/g or more, 14.7 μg/g or more, 14.8 μg/g or more, 14.9 μg/g or more, 15.0 μg/g or more, 15.1 μg/g or more, 15.2 μg/g or more, 15.3 μg/g or more, 15.4 μg/g or more, 15.5 μg/g or more, 15.6 μg/g or more, 15.7 μg/g or more, 15.8 μg/g or more, 15.9 μg/g or more, 16.0 μg/g or more, 16.1 μg/g or more, 16.2 μg/g or more, 16.3 μg/g or more, 16.4 μg/g or more, 16.5 μg/g or more, 16.6 μg/g or more, 16.7 μg/g or more, 16.8 μg/g or more, 16.9 μg/g or more, 17.0 μg/g or more, 17.1 μg/g or more, 17.2 μg/g or more, 17.3 μg/g or more, 17.4 μg/g or more, 17.5 μg/g or more, 17.6 μg/g or more, 17.7 μg/g or more, 17.8 μg/g or more, 17.9 μg/g or more, 18.0 μg/g or more, 18.1 μg/g or more, 18.2 μg/g or more, 18.3 μg/g or more, 18.4 μg/g or more, 18.5 μg/g or more, 18.6 μg/g or more, 18.7 μg/g or more, 18.8 μg/g or more, 18.9 μg/g or more, 19.0 μg/g or more, 19.1 μg/g or more, 19.2 μg/g or more, 19.3 μg/g or more, 19.4 μg/g or more, 19.5 μg/g or more, 19.6 μg/g or more, 19.7 μg/g or more, 19.8 μg/g or more, 19.9 μg/g or more, 20.0 μg/g or more, 20.1 μg/g or more, 20.2 μg/g or more, 20.3 μg/g or more, 20.4 μg/g or more, 20.5 μg/g or more, 20.6 μg/g or more, 20.7 μg/g or more, 20.8 μg/g or more, 20.9 μg/g or more, 21.0 μg/g or more, 21.1 μg/g or more, 21.2 μg/g or more, 21.3 μg/g or more, 21.4 μg/g or more, 21.5 μg/g or more, 21.6 μg/g or more, 21.7 μg/g or more, 21.8 μg/g or more, or 21.9 μg/g or more.

In the present specification, the description "content of purines" means a total content of purine bases including a group of adenine, guanine, xanthine, and hypoxanthine.

The content of xanthine in the processed food produced through step (a) is preferably less than 20.0 μg/g, 19.9 μg/g or less, 19.8 μg/g or less, 19.7 μg/g or less, 19.6 μg/g or less, 19.5 μg/g or less, 19.4 μg/g or less, 19.3 μg/g or less, 19.2 μg/g or less, 19.1 μg/g or less, 19.0 μg/g or less, 18.9 μg/g or less, 18.8 μg/g or less, 18.7 μg/g or less, 18.6 μg/g or less, 18.5 μg/g or less, 18.4 μg/g or less, 18.3 μg/g or less, 18.2 μg/g or less, 18.1 μg/g or less, 18.0 μg/g or less, 17.9 μg/g or less, 17.8 μg/g or less, 17.7 μg/g or less, 17.6 μg/g or less, 17.5 μg/g or less, 17.4 μg/g or less, 17.3 μg/g or less, 17.2 μg/g or less, 17.1 μg/g or less, 17.0 μg/g or less, 16.9 μg/g or less, 16.8 μg/g or less, 16.7 μg/g or less, 16.6 μg/g or less, 16.5 μg/g or less, 16.4 μg/g or less, 16.3 μg/g or less, 16.2 μg/g or less, 16.1 μg/g or less, 16.0 μg/g or less, 15.9 μg/g or less, 15.8 μg/g or less, 15.7 μg/g or less, 15.6 μg/g or less, 15.5 μg/g or less, 15.4 μg/g or less, 15.3 μg/g or less, 15.2 μg/g or less, 15.1 μg/g or less, 15.0 μg/g or less, 14.9 μg/g or less, 14.8 μg/g or less, 14.7 μg/g or less, 14.6 μg/g or less, 14.5 μg/g or less, 14.4 μg/g or less, 14.3 μg/g or less, 14.2 μg/g or less, 14.1 μg/g or less, 14.0 μg/g or less, 13.9 μg/g or less, 13.8 μg/g or less, 13.7 μg/g or less, 13.6 μg/g or less, 13.5 μg/g or less, 13.4 μg/g or less, 13.3 μg/g or less, 13.2 μg/g or less, 13.1 μg/g or less, 13.0 μg/g or less, 12.9 μg/g or less, 12.8 μg/g or

less, 12.7 μg/g or less, 12.6 μg/g or less, 12.5 μg/g or less, 12.4 μg/g or less, 12.3 μg/g or less, 12.2 μg/g or less, 12.1 μg/g or less, 12.0 μg/g or less, 11.9 μg/g or less, 11.8 μg/g or less, 11.7 μg/g or less, 11.6 μg/g or less, 11.5 μg/g or less, 11.4 μg/g or less, 11.3 μg/g or less, 11.2 μg/g or less, 11.1 μg/g or less, 11.0 μg/g or less, 10.9 μg/g or less, 10.8 μg/g or less, 10.7 μg/g or less, 10.6 μg/g or less, 10.5 μg/g or less, 10.4 μg/g or less, 10.3 μg/g or less, 10.2 μg/g or less, 10.1 μg/g or less, 10.0 μg/g or less, less than 10.0 μg/g, 9.9 μg/g or less, 9.8 μg/g or less, 9.7 μg/g or less, 9.6 μg/g or less, 9.5 μg/g or less, 9.4 μg/g or less, 9.3 μg/g or less, 9.2 μg/g or less, 9.1 μg/g or less, 9.0 μg/g or less, 8.9 μg/g or less, 8.8 μg/g or less, 8.7 μg/g or less, 8.6 μg/g or less, 8.5 μg/g or less, 8.4 μg/g or less, 8.3 μg/g or less, 8.2 μg/g or less, 8.1 μg/g or less, 8.0 μg/g or less, 7.9 μg/g or less, 7.8 μg/g or less, 7.7 μg/g or less, 7.6 μg/g or less, 7.5 μg/g or less, 7.4 μg/g or less, 7.3 μg/g or less, 7.2 μg/g or less, 7.1 μg/g or less, 7.0 μg/g or less, 6.9 μg/g or less, 6.8 μg/g or less, 6.7 μg/g or less, 6.6 μg/g or less, 6.5 μg/g or less, 6.4 μg/g or less, 6.3 μg/g or less, 6.2 μg/g or less, 6.1 μg/g or less, 6.0 μg/g or less, 5.9 μg/g or less, 5.8 μg/g or less, 5.7 μg/g or less, 5.6 μg/g or less, 5.5 μg/g or less, 5.4 μg/g or less, 5.3 μg/g or less, 5.2 μg/g or less, 5.1 μg/g or less, 5.0 μg/g or less, less than 5.0 μg/g, 4.9 μg/g or less, 4.8 μg/g or less, 4.7 μg/g or less, 4.6 μg/g or less, 4.5 μg/g or less, 4.4 μg/g or less, 4.3 μg/g or less, 4.2 μg/g or less, 4.1 μg/g or less, 4.0 μg/g or less, 3.9 μg/g or less, 3.8 μg/g or less, 3.7 μg/g or less, 3.6 μg/g or less, 3.5 μg/g or less, 3.4 μg/g or less, 3.3 μg/g or less, 3.2 μg/g or less, 3.1 μg/g or less, 3.0 μg/g or less, less than 3.0 μg/g, 2.9 μg/g or less, 2.8 μg/g or less, 2.7 μg/g or less, 2.6 μg/g or less, 2.5 μg/g or less, 2.4 μg/g or less, 2.3 μg/g or less, 2.2 μg/g or less, 2.1 μg/g or less, 2.0 μg/g or less, 1.9 μg/g or less, 1.8 μg/g or less, 1.7 μg/g or less, 1.6 μg/g or less, 1.5 μg/g or less, 1.4 μg/g or less, 1.3 μg/g or less, 1.2 μg/g or less, 1.1 μg/g or less, 1.0 μg/g or less, 0.9 μg/g or less, 0.8 μg/g or less, 0.7 μg/g or less, 0.6 μg/g or less, 0.5 μg/g or less, 0.4 μg/g or less, 0.3 μg/g or less, 0.2 μg/g or less, or 0.1 μg/g or less, and may be more than 0.0 μg/g, 0.01 μg/g or more, 0.05 μg/g or more, 0.1 μg/g or more, 0.2 μg/g or more, 0.3 μg/g or more, 0.4 μg/g or more, 0.5 μg/g or more, 0.6 μg/g or more, 0.7 μg/g or more, 0.8 μg/g or more, 0.9 μg/g or more, 1.0 μg/g or more, 1.1 μg/g or more, 1.2 μg/g or more, 1.3 μg/g or more, 1.4 μg/g or more, 1.5 μg/g or more, 1.6 μg/g or more, 1.7 μg/g or more, 1.8 μg/g or more, 1.9 μg/g or more, or 2.0 μg/g or more.

The "content of purines" and the "content of xanthine", and the "total content of adenine and guanine" described later can be measured by a detection method using LC-MS/MS ("Guide to Microanalysis of Purines in Alcoholic Beverages", Japan Food Research Laboratories, Internet (https://www.jfrl.or.jp/storage/file/news_vo14_no23.pdf, searched in August 2015)).

The food composition having xanthine oxidase activity used in step (a) is not particularly limited and is, for example, a composition containing a raw material originating from a wide range of biological species ranging from bacteria, to mammals, and higher plants. Specific examples include compositions containing raw milk (unsterilized raw milk) of a mammal, such as a cow; a microorganism belonging to the genera *Pseudomonas, Escherichia, Arthrobacter, Nocardia,* or the like; or *Enterobacter cloacae* or the like.

The food composition may be solid or liquid.

In addition, in an embodiment of the present invention, the food composition may be a food composition having xanthine oxidase activity, and also includes a food composition containing a protein which has had xanthine oxidase activity. Furthermore, the food composition used in an embodiment of the present invention also includes a food composition produced using a raw material containing a protein having xanthine oxidase activity.

Moreover, the processed food produced through step (a) also includes a processed food in which a raw material containing a protein having xanthine oxidase activity is used, but the xanthine oxidase activity has been inactivated by a process such as heating and/or pH adjustment.

The xanthine oxidase activity value of the food composition used in step (a) may be 0.01 U or more, 0.05 U or more, 0.1 U or more, 0.3 U or more, 0.5 U or more, 0.7 U or more, 1.0 U or more, 1.5 U or more, 2.0 U or more, 2.5 U or more, 3.0 U or more, 3.5 U or more, 4.0 U or more, 5.0 U or more, 5.5 U or more, 6.0 U or more, 7.0 U or more, 8.0 U or more, 9.0 U or more, or 10.0 U or more, and may be 10000 U or less, 9000 U or less, 8000 U or less, 7000 U or less, or 6000 U or less.

In the present specification, the xanthine oxidase activity value means the relative amount of the enzyme when the amount of the enzyme needed for production of 1 μmol of uric acid per minute under the following conditions is defined as 1 unit (U).

2.9 mL of a 50 mM tris-hydrochloric acid buffer solution and 0.1 mL of a 10 mM xanthine aqueous solution are mixed and pre-heated at 37°C, then 0.01 mL of a solution of an analyte is added thereto and the mixture is mixed gently. Then, the mixture is measured for a change in absorption at 293 nm per minute using a spectrophotometer controlled at 37°C with water as a control. The amount of the enzyme needed for production of 1 μmol of uric acid per minute is determined from this value and defined as 1 unit (U), and the amount of the enzyme relative to 1 unit (U) is defined as the xanthine oxidase activity value.

In step (a), the timing of adding the food composition having xanthine oxidase activity is any timing in the production process of each processed food. The composition may be added all at once or may be added in multiple times.

In step (a), a heat treatment may be carried out after addition of the food composition having xanthine oxidase activity.

In the heat treatment, the heating temperature may be 20°C or higher, 25°C or higher, 30°C or higher, 35°C or higher, 40°C or higher, or 45°C or higher, and may be 140°C or lower, 135°C or lower, 130°C or lower, 125°C or lower, 120°C or lower, 115°C or lower, 110°C or lower, 105°C or lower, 100°C or lower, 95°C or lower, 90°C or lower, 85°C or lower, or 80°C or lower.

In addition, the heating time may be 1 minute or more, 10 minutes or more, 20 minutes or more, 30 minutes or more, 40 minutes or more, 50 minutes or more, or 60 minutes or more, and may be 10 hours or less, 9 hours or less, 8 hours or less, 7 hours or less, or 6 hours or less.

In addition, the pH of the raw material after addition of the food composition having xanthine oxidase activity in step (a) may be 2.0 or higher, 2.2 or higher, 2.4 or higher, 2.6 or higher, 2.8 or higher, 3.0 or higher, 3.1 or higher, 3.2 or higher, 3.3 or higher, 3.4 or higher, 3.5 or higher, 3.6 or higher, 3.7 or higher, 3.8 or higher, 3.9 or higher, 4.0 or higher, 4.1 or higher, 4.2 or higher, 4.3 or higher, 4.4 or higher, 4.5 or higher, 4.6 or higher, 4.7 or higher, 4.8 or higher, 4.9 or higher, or 5.0 or higher, and may be 7.0 or lower, 6.9 or lower, 6.8 or lower, 6.7 or lower, 6.6 or lower, 6.5 or lower, 6.4 or lower, 6.3 or lower, 6.2 or lower, 6.1 or lower, 6.0 or lower, 5.9 or lower, 5.8 or lower, 5.7 or lower, 5.6 or lower, 5.5 or lower, 5.4 or lower, 5.3 or lower, 5.2 or lower, 5.1 or lower, 5.0 or lower, 4.9 or lower, 4.8 or lower, 4.7 or lower, 4.6 or lower, 4.5 or lower, 4.4 or lower, 4.3 or lower, 4.2 or lower, 4.1 or lower, or 4.0 or lower.

The processed food produced by the production method according to an embodiment of the present invention may have residual xanthine oxidase activity.

The xanthine oxidase activity value of the produced processed food may be 0.01 U or more, 0.05 U or more, 0.1 U or more, 0.3 U or more, 0.5 U or more, 0.7 U or more, 1.0 U or more, 1.5 U or more, 2.0 U or more, 2.5 U or more, 3.0 U or more, 3.5 U or more, 4.0 U or more, 5.0 U or more, 5.5 U or more, 6.0 U or more, 7.0 U or more, 8.0 U or more, 9.0 U or more, or 10.0 U or more, and may be 10000 U or less, 9000 U or less, 8000 U or less, 7000 U or less, or 6000 U or less.

Through step (a), the processed food having a lowered purine content and containing uric acid can be produced. Uric acid contained in a processed food has an effect of suppressing deterioration of properties (such as flavor and appearance) peculiar to each processed food and improving stability of various properties.

That is, the method of producing a processed food of the present invention can prepare a uric acid-containing processed food through step (a).

In the present specification, "uric acid" refers to a compound represented by the following formula and can be synthesized, for example, from an oxypurine, such as xanthine or hypoxanthine, by xanthine oxidase. In addition, the uric acid is distinguished from a uric acid produced as an end product of metabolism of purines which are one of the constituent components of nucleic acids (DNAs and RNAs) and ATP in the human body.

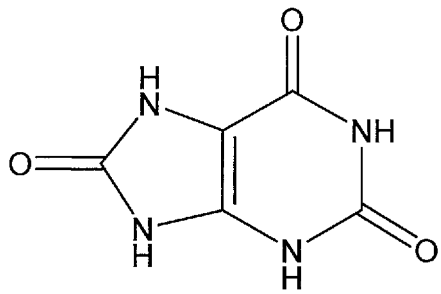

The content of uric acid in the processed food produced through step (a) may be 0.001 µg/g or more, 0.003 µg/g or more, 0.005 µg/g or more, 0.007 µg/g or more, 0.01 µg/g or more, 0.03 µg/g or more, 0.05 µg/g or more, 0.07 µg/g or more, 0.10 µg/g or more, 0.15 µg/g or more, 0.20 µg/g or more, 0.25 µg/g or more, 0.30 µg/g or more, 0.35 µg/g or more, 0.40 µg/g or more, 0.45 µg/g or more, 0.50 µg/g or more, 0.55 µg/g or more, 0.60 µg/g or more, 0.65 µg/g or more, 0.70 µg/g or more, 0.75 µg/g or more, 0.80 µg/g or more, 0.85 µg/g or more, 0.90 µg/g or more, 0.95 µg/g or more, 1.0 µg/g or more, 1.5 µg/g or more, 2.0 µg/g or more, 2.5 µg/g or more, 3.0 µg/g or more, 3.5 µg/g or more, 4.0 µg/g or more, 4.5 µg/g or more, 5.0 µg/g or more, 5.5 µg/g or more, 6.0 µg/g or more, 6.5 µg/g or more, 7.0 µg/g or more, 7.5 µg/g or more, 8.0 µg/g or more, 8.5 µg/g or more, 9.0 µg/g or more, 9.5 µg/g or more, 10.0 µg/g or more, 11.0 µg/g or more, 12.0 µg/g or more, 13.0 µg/g or more, 14.0 µg/g or more, 15.0 µg/g or more, 16.0 µg/g or more, 17.0 µg/g or more, 18.0 µg/g or more, 19.0 µg/g or more, or 20.0 µg/g or more.

In addition, the content of uric acid in the processed food produced through step (a) may be 10000 µg/g or less, 9000 µg/g or less, 8000 µg/g or less, 7000 µg/g or less, 6000 µg/g or less, 5000 µg/g or less, 4500 µg/g or less, 4000 µg/g or less, 4500 µg/g or less, 3000 µg/g or less, 2500 µg/g or less, 2200 µg/g or less, 2000 µg/g or less, 1800 µg/g or less, 1600 µg/g or less, 1500 µg/g or less, 1300 µg/g or less, 1200 µg/g or less, 1100 µg/g or less, 1000 µg/g or less, 900 µg/g or less, 800 µg/g or less, 700 µg/g or less, 600 µg/g or less, 500 µg/g or less, 450 µg/g or less, 400

μg/g or less, 350 μg/g or less, 300 μg/g or less, 280 μg/g or less, 250 μg/g or less, 220 μg/g or less, 200 μg/g or less, 180 μg/g or less, 160 μg/g or less, 150 μg/g or less, 140 μg/g or less, 130 μg/g or less, 120 μg/g or less, 110 μg/g or less, 100 μg/g or less, 95 μg/g or less, 90 μg/g or less, 85 μg/g or less, 80 μg/g or less, 75 μg/g or less, 70 μg/g or less, 65 μg/g or less, 60 μg/g or less, 55 μg/g or less, 50 μg/g or less, 45 μg/g or less, 40 μg/g or less, 35 μg/g or less, 30 μg/g or less, 27 μg/g or less, 25 μg/g or less, 22 μg/g or less, or 20 μg/g or less.

The content of uric acid means the mass of uric acid contained in 1 g of the processed food. In the case where the processed food is a liquid, the content of uric acid can also be defined as the mass of uric acid contained in 1 mL of the liquid processed food when the density of the liquid is assumed 1.0 mL/cm$^3$.

In the present specification, the content (X) of uric acid can be measured by high-performance liquid chromatography (HPLC), for example, under the specific measurement conditions as follows.

· Measurement sample: A liquid prepared by diluting a processed food as a measurement target 10 times with distilled water and filtering the dilution through a membrane filter with a pore size of 0.2 μm. For a processed food containing a solid content, the processed food may be finely ground as necessary to facilitate dilution with distilled water.

- Measurement device: A high-performance liquid chromatograph Chromaster (available from Hitachi High-Technologies Corporation)
- Detector: 5420UV-VIS detector (available from Hitachi High-Technologies Corporation)
- Column: Inertsil ODS-4 (4.6 mm x 250 mm, 5 μm)
- Column temperature: 40°C
- Mobile phase: A = a 74 mM phosphate buffer solution (pH 2.2), B = methanol, A/B = 98/2 (volume ratio)
- Flow rate: 1.0 mL/min
- Injection volume: 50 μL
- Measurement wavelength: 284 nm

In addition, the method of producing a processed food according to an embodiment of the present invention may include: (a1) adding a food composition having uricase activity, simultaneously with step (a) and/or after step (a).

Through the uricase treatment of step (a1), uric acid produced by the xanthine oxidase treatment of step (a) is oxidized and decomposed into allantoin, the content of uric acid can thus be lowered. Thus, the processed food obtained through step (a1) may be a processed food containing allantoin.

The food composition having uricase activity used in step (a1) is not particularly limited and is, for example, a composition containing a raw material originating from a wide range of biological species ranging from bacteria, to mammals, and higher plants. Specific examples include compositions containing raw milk (unsterilized raw milk) of a mammal, such as a cow; a microorganism belonging to the genera *Pseudomonas, Escherichia, Arthrobacter, Nocardia, or the like*; or *Enterobacter cloacae* or the like.

The food composition may be solid or liquid.

In addition, in an embodiment of the present invention, the food composition may be a food composition having uricase activity, and also includes a food composition containing a protein which has had uricase activity. Furthermore, the food composition used in an embodiment of the present invention also includes a food composition obtained using a raw material containing a protein having uricase activity.

Moreover, the processed food produced through step (a1) also includes a processed food in which a raw material containing a protein having uricase activity has been used, but the uricase activity has been inactivated by a process such as heating and/or pH adjustment.

The uricase activity value of the food composition used in step (a1) may be 0.01 U or more, 0.05 U or more, 0.1 U or more, 0.3 U or more, 0.5 U or more, 0.7 U or more, 1.0 U or more, 1.5 U or more, 2.0 U or more, 2.5 U or more, 3.0 U or more, 3.5 U or more, 4.0 U or more, 5.0 U or more, 5.5 U or more, 6.0 U or more, 7.0 U or more, 8.0 U or more, 9.0 U or more, or 10.0 U or more, and may be 10000 U or less, 9000 U or less, 8000 U or less, 7000 U or less, or 6000 U or less.

In the present specification, the uricase activity value means the relative amount of the enzyme when the amount of the enzyme needed for production of 1 μmol of allantoin per minute under the following conditions is defined as 1 unit (U).

2.9 mL of a 50 mM tris-hydrochloric acid buffer solution and 0.1 mL of a 10 mM uric acid aqueous solution are mixed and pre-heated at 37°C, then 0.01 mL of a solution of an analyte is added and mixed gently, and then a change in absorption at 293 nm per minute is determined using a spectrophotometer controlled at 37°C with water as a control. The amount of the enzyme needed for production of 1 μmol of allantoin per minute is determined from this value and defined as 1 unit (U), and the amount of the enzyme relative to 1 unit (U) is defined as the uricase activity value.

In step (a1), the timing of adding the food composition having uricase activity is any timing in the production

process of each processed food. The composition may be added all at once or may be added in multiple times.

In step (a1), a heat treatment may be carried out after addition of the food composition having uricase activity.

In the heat treatment, the heating temperature may be 20°C or higher, 25°C or higher, 30°C or higher, 35°C or higher, 40°C or higher, or 45°C or higher, and may be 140°C or lower, 135°C or lower, 130°C or lower, 125°C or lower, 120°C or lower, 115°C or lower, 110°C or lower, 105°C or lower, 100°C or lower, 95°C or lower, 90°C or lower, 85°C or lower, or 80°C or lower.

In addition, the heating time may be 1 minute or more, 10 minutes or more, 20 minutes or more, 30 minutes or more, 40 minutes or more, 50 minutes or more, or 60 minutes or more, and may be 10 hours or less, 9 hours or less, 8 hours or less, 7 hours or less, or 6 hours or less.

In addition, the pH of the raw material after addition of the food composition having uricase activity in step (a1) may be 2.0 or higher, 2.2 or higher, 2.4 or higher, 2.6 or higher, 2.8 or higher, 3.0 or higher, 3.1 or higher, 3.2 or higher, 3.3 or higher, 3.4 or higher, 3.5 or higher, 3.6 or higher, 3.7 or higher, 3.8 or higher, 3.9 or higher, 4.0 or higher, 4.1 or higher, 4.2 or higher, 4.3 or higher, 4.4 or higher, 4.5 or higher, 4.6 or higher, 4.7 or higher, 4.8 or higher, 4.9 or higher, or 5.0 or higher, and may be 7.0 or lower, 6.9 or lower, 6.8 or lower, 6.7 or lower, 6.6 or lower, 6.5 or lower, 6.4 or lower, 6.3 or lower, 6.2 or lower, 6.1 or lower, 6.0 or lower, 5.9 or lower, 5.8 or lower, 5.7 or lower, 5.6 or lower, 5.5 or lower, 5.4 or lower, 5.3 or lower, 5.2 or lower, 5.1 or lower, 5.0 or lower, 4.9 or lower, 4.8 or lower, 4.7 or lower, 4.6 or lower, 4.5 or lower, 4.4 or lower, 4.3 or lower, 4.2 or lower, 4.1 or lower, or 4.0 or lower.

Xanthine can be converted into uric acid by the xanthine oxidase treatment of step (a). Then, further through step (a1), the method can produce a processed food in which part of the uric acid is converted into allantoin by the uricase treatment. The processed food produced through step (a1) may be a processed food having uricase activity or may be a processed food containing a protein which has had uricase activity.

In the case where the processed food produced through step (a1) has uricase activity, the uricase activity value of the processed food may be 0.01 U or more, 0.05 U or more, 0.1 U or more, 0.3 U or more, 0.5 U or more, 0.7 U or more, 1.0 U or more, 1.5 U or more, 2.0 U or more, 2.5 U or more, 3.0 U or more, 3.5 U or more, 4.0 U or more, 5.0 U or more, 5.5 U or more, 6.0 U or more, 7.0 U or more, 8.0 U or more, 9.0 U or more, or 10.0 U or more, and may be 10000 U or less, 9000 U or less, 8000 U or less, 7000 U or less, or 6000 U or less.

In the present specification, "allantoin" refers to a compound represented by the following formula and can be synthesized, for example, by oxidizing uric acid. In addition, the allantoin is distinguished from allantoin produced by oxidizing uric acid produced as an end product of metabolism of purines which are one of the constituent components of nucleic acids (DNAs and RNAs) and ATP in the human body.

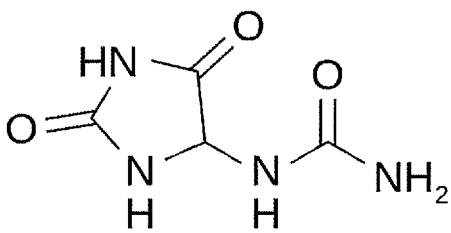

The content of allantoin in the processed food produced through step (a1) may be 0.10 μg/g or more, 0.30 μg/g or more, 0.50 μg/g or more, 0.70 μg/g or more, 1.0 μg/g or more, 1.2 μg/g or more, 1.5 μg/g or more, 1.7 μg/g or more, 2.0 μg/g or more, 2.5 μg/g or more, 3.0 μg/g or more, 3.5 μg/g or more, 4.0 μg/g or more, 4.5 μg/g or more, 5.0 μg/g or more, 10.0 μg/g or more, 15.0 μg/g or more, 20.0 μg/g or more, 25.0 μg/g or more, 30.0 μg/g or more, 35.0 μg/g or more, 40.0 μg/g or more, 45.0 μg/g or more, 50.0 μg/g or more, 55.0 μg/g or more, 60.0 μg/g or more, 65.0 μg/g or more, 70.0 μg/g or more, 75.0 μg/g or more, 80.0 μg/g or more, 85.0 μg/g or more, 90.0 μg/g or more, 95.0 μg/g or more, 100.0 μg/g or more, 105.0 μg/g or more, 110.0 μg/g or more, 115.0 μg/g or more, 120.0 μg/g or more, 125.0 μg/g or more, 130.0 μg/g or more, 135.0 μg/g or more, 140.0 μg/g or more, 145.0 μg/g or more, 150.0 μg/g or more, 155.0 μg/g or more, 160.0 μg/g or more, 165.0 μg/g or more, 170.0 μg/g or more, 175.0 μg/g or more, 180.0 μg/g or more, 185.0 μg/g or more, 190.0 μg/g or more, or 195.0 μg/g or more, and may be 200.0 μg/g or less, 195.0 μg/g or less, 190.0 μg/g or less, 185.0 μg/g or less, 180.0 μg/g or less, 175.0 μg/g or less, 170.0 μg/g or less, 165.0 μg/g or less, 160.0 μg/g or less, 155.0 μg/g or less, 150.0 μg/g or less, 145.0 μg/g or less, 140.0 μg/g or less, 135.0 μg/g or less, 130.0 μg/g or less, 125.0 μg/g or less, 120.0 μg/g or less, 115.0 μg/g or less, 110.0 μg/g or less, 105.0 μg/g or less, 100.0 μg/g or less, 95.0 μg/g or less, 90.0 μg/g or less, 85.0 μg/g or less, 80.0 μg/g or less, 75.0 μg/g or less, 70.0 μg/g or less, 65.0 μg/g or less, 60.0 μg/g or less, 55.0 μg/g or less, 50.0 μg/g or less, 45.0 μg/g or less, 40.0 μg/g or less, 35.0 μg/g or less, 30.0 μg/g or less, 25.0 μg/g or less, 20.0 μg/g or less, 15.0 μg/g or less, or 10.0 μg/g or less.

Allantoin is converted into an ammonium ion.

Thus, the content of allantoin in the processed food produced through step (a1) may be 9.0 μg/g or less, 8.0

μg/g or less, 7.0 μg/g or less, 6.0 μg/g or less, 5.0 μg/g or less, 4.0 μg/g or less, 3.0 μg/g or less, 2.0 μg/g or less, 1.0 μg/g or less, or less than 1.0 μg/g.

The content of allantoin means the mass of allantoin contained in 1 g of the processed food. In the case where the processed food is a liquid, the content of allantoin can also be defined as the mass of allantoin contained in 1 mL of the liquid processed food when the density of the liquid is assumed 1.0 mL/$cm^3$.

In the present specification, the content of allantoin can be measured using LC-MS/MS, specifically under the following conditions.

- · Measurement sample: A liquid prepared by diluting a processed food as a measurement target 10 times with distilled water and filtering the dilution through a membrane filter with a pore size of 0.2 μm. For a processed food containing a solid content, the processed food may be finely ground as necessary to facilitate dilution with distilled water.
- · Measurement device: LCMS-8040 (available from Shimadzu Corporation)
- · Column: Discovery HS F5-3 (15 cm x 2.1 mm, 3 μm)
- · Column temperature: 40°C
- · Mobile phase: A = a 0.03 (v/v)% formic acid aqueous solution, B = 100% acetonitrile, A/B = 90/10 (volume ratio)
- · Flow rate: 0.3 mL/min
- · Injection volume: 10 μL

The method of producing a processed food according to an embodiment of the present invention may further include: (b) performing a treatment of removing purines in addition to step (a).

Examples of the treatment of removing purines performed in step (b) include an adsorption treatment including adsorbing and removing purines using activated carbon or zeolite. Specifically, a known method can be employed as the method of the adsorption treatment.

The method of producing a processed food according to an embodiment of the present invention need not include step (b) from the viewpoint of suppressing flavor deterioration in the processed food obtained. On the other hand, the method may include step (b) from the viewpoint of producing a processed food with further lowered content of purines.

In addition, in step (b), one or more enzymatic treatment(s) selected from the group consisting of a purine nucleosidase treatment, an adenine deaminase treatment, and a guanine deaminase treatment may be performed before performing the adsorption treatment.

In the purine nucleosidase treatment, purine nucleosidase is acted on a raw material liquid before fermentation or a fermented liquid after fermentation in advance, and thus adenosine and guanosine in the solution can be converted into free purine groups and at least some of the free purine groups can be converted into xanthine, which is a yeast-non-assimilable free purine group.

Furthermore, adenine can be converted into hypoxanthine by performing the adenine deaminase treatment and then performing the xanthine oxidase treatment, which enables efficient degradation by xanthine oxidase.

Likewise, guanine can be converted into xanthine by performing the guanine deaminase treatment and then performing the xanthine oxidase treatment, which enables efficient degradation by xanthine oxidase.

The total content of adenine and guanine in the processed food produced through step (b) is preferably 22.0 μg/g or less, more preferably 20.0 μg/g or less, even more preferably less than 20.0 μg/g, still more preferably 19.0 μg/g or less, particularly preferably 18.0 μg/g or less, and further may be 17.0 μg/g or less, 16.5 μg/g or less, 16.0 μg/g or less, 15.5 μg/g or less, 15.0 μg/g or less, 14.5 μg/g or less, 14.0 μg/g or less, 13.5 μg/g or less, 13.0 μg/g or less, 12.5 μg/g or less, 12.0 μg/g or less, 11.5 μg/g or less, 11.0 μg/g or less, 10.5 μg/g or less, 10.0 μg/g or less, less than 10.0 μg/g, 9.5 μg/g or less, 9.0 μg/g or less, 8.5 μg/g or less, 8.0 μg/g or less, 7.5 μg/g or less, 7.0 μg/g or less, 6.5 μg/g or less, 6.0 μg/g or less, 5.5 μg/g or less, 5.0 μg/g or less, less than 5.0 μg/g, 4.5 μg/g or less, 4.0 μg/g or less, 3.5 μg/g or less, 3.0 μg/g or less, 2.5 μg/g or less, 2.2 μg/g or less, 2.0 μg/g or less, 1.7 μg/g or less, 1.5 μg/g or less, 1.2 μg/g or less, or 1.0 μg/g or less, and may be more than 0.00 μg/g, 0.01 μg/g or more, 0.05 μg/g or more, 0.10 μg/g or more, 0.20 μg/g or more, 0.30 μg/g or more, 0.40 μg/g or more, 0.50 μg/g or more, 0.60 μg/g or more, 0.70 μg/g or more, 0.80 μg/g or more, 0.90 μg/g or more, 1.00 μg/g or more, 1.10 μg/g or more, 1.20 μg/g or more, 1.30 μg/g or more, 1.40 μg/g or more, 1.50 μg/g or more, 1.60 μg/g or more, 1.70 μg/g or more, 1.80 μg/g or more, or 1.90 μg/g or more.

From the viewpoint of producing a processed food with further lowered purine content, the method of producing a processed food according to an embodiment of the present invention is preferably a production method including step (a) after undergoing step (b), and more preferably a production method including step (a) after undergoing one or more enzymatic treatment(s) selected from the group consisting of the purine nucleosidase treatment, the adenine deaminase treatment, and the guanine deaminase treatment (more preferably after undergoing at least the purine nucleosidase treatment). The production method may include step (a1) of adding a food composition having uricase activity, simultaneously with step (a) and/or after step (a).

The processed food thus obtained is filled in a predetermined container and distributed to the market as a product.

The method of packaging the processed food is not particularly limited, and a packaging method known to those skilled in the art can be used. Through the packaging, the processed food is filled and sealed in a container.

In the packaging, a container of any form and material may be used, and examples of the container include a bottle, a can, a barrel, or a PET bottle. In particular, from the viewpoint of easy portability, the container is preferably a can, a bottle, or a PET bottle.

In an embodiment of the present invention, as described above, a food composition having at least one of xanthine oxidase activity or uricase activity, more specifically, a food composition having a xanthine oxidase activity of 0.01 U or more (preferably 0.1 U or more), and a food composition having a uricase activity of 0.01 U or more (preferably 0.1 U or more) can be provided.

The food composition according to an embodiment of the present invention may be in the form of the purine-lowering agent for food or may be in the form of the purine-lowering additive for food or purine-lowering enzymatic agent for food.

The food composition according to an embodiment of the present invention can be used in production of a processed food, and in particular, a food composition having xanthine oxidase activity can be used in production of a uric acid-containing processed food. Thus, an embodiment of the present invention can also provide a method of use, including applying the food composition of the present invention in production of a uric acid-containing processed food.

The food composition according to an embodiment of the present invention may be in any form of a food composition having at least one of xanthine oxidase activity or uricase activity; a food composition having both xanthine oxidase activity and uricase activity; and a mixture of a food composition having xanthine oxidase activity and a food composition having uricase activity.

The food composition according to an embodiment of the present invention may be in the form of the purine-lowering agent for food and more specifically may be in the form of the purine-lowering additive for food or purine-lowering enzymatic agent for food.

The purine-lowering agent for food falls under the definition that "additives mean substances which are used by being added, mixed or infiltrated into food or by other methods in the process of producing food or for the purpose of processing or preserving food" as stipulated in Article 2, Item 2 of the Food Sanitation Law and is an additive having xanthine oxidase activity and/or uricase activity.

In addition, the purine-lowering enzymatic agent for food may contain a filler, an buffering agent, a suspending agent, a stabilizer, a preservative, an antiseptic, a physiological saline solution, and/or the like in addition to the active ingredient having xanthine oxidase activity (i.e., the enzyme).

The degree of purification of the enzyme as an active ingredient is not particularly limited. That is, the enzyme may be a crude enzyme or a purified enzyme.

Examples of the filler include lactose, sorbitol, D-mannitol, maltodextrin, and white sugar.

Examples of the buffering agent include phosphate salts, citrate salts, and acetate salts.

For the stabilizer, for example, propylene glycol or ascorbic acid can be used. Examples of the preservative include phenol, benzalkonium chloride, benzyl alcohol, chlorobutanol, and methyl paraben.

Examples of the antiseptic include benzalkonium chloride, paraoxybenzoic acid, and chlorobutanol.

The purine-lowering enzymatic agent for food can be produced, for example, through (I) and (II) below:

(I) culturing a microorganism that produces the enzyme; and
(II) removing bacterial cells after the culture.

In step (I), the culture conditions and culture method are not particularly limited as long as they allow production of the enzyme. That is, a method and culture conditions suitable for the culture of the microorganism used can be appropriately set with the condition that the enzyme is produced. The culture method may be liquid culture or solid culture.

Examples of the method of removing bacterial cells in step (II) include centrifugation, filtration, and filter treatment.

The culture solution containing no bacterial cells obtained through steps (I) and (II) undergoes step (III) of purifying the culture solution as necessary and then used as an enzymatic agent.

The pH at which the enzyme activity of the food composition according to an embodiment of the present invention is expressed may be 2.0 or higher, 2.2 or higher, 2.4 or higher, 2.6 or higher, 2.8 or higher, 3.0 or higher, 3.1 or higher, 3.2 or higher, 3.3 or higher, 3.4 or higher, 3.5 or higher, 3.6 or higher, 3.7 or higher, 3.8 or higher, 3.9 or higher, 4.0 or higher, 4.1 or higher, 4.2 or higher, 4.3 or higher, 4.4 or higher, 4.5 or higher, 4.6 or higher, 4.7 or higher, 4.8 or higher, 4.9 or higher, or 5.0 or higher, and may be 7.0 or lower, 6.9 or lower, 6.8 or lower, 6.7 or lower, 6.6 or lower, 6.5 or lower, 6.4 or lower, 6.3 or lower, 6.2 or lower, 6.1 or lower, 6.0 or lower, 5.9 or lower, 5.8 or lower, 5.7 or lower, 5.6 or lower, 5.5 or lower, 5.4 or lower, 5.3 or lower, 5.2 or lower, 5.1 or lower, 5.0 or lower, 4.9 or lower, 4.8 or lower, 4.7 or lower, 4.6 or lower, 4.5 or lower, 4.4 or lower, 4.3 or lower, 4.2 or lower, 4.1 or lower, or 4.0 or lower.

The temperature at which the enzyme activity of the food composition according to an embodiment of the

present invention is expressed may be 0°C or higher, 5°C or higher, 15°C or higher, 20°C or higher, 25°C or higher, 30°C or higher, 35°C or higher, 40°C or higher, or 45°C or higher, and may be 140°C or lower, 135°C or lower, 130°C or lower, 125°C or lower, 120°C or lower, 115°C or lower, 110°C or lower, 105°C or lower, 100°C or lower, 95°C or lower, 90°C or lower, 85°C or lower, 80°C or lower, 75°C or lower, or 70°C or lower.

The food composition according to an embodiment of the present invention can be added in a production process of various processed foods but is particularly preferably added in a production process of a beer-taste beverage and more preferably added in a production process of a fermented malt beverage.

Beer-taste beverages (in particular, fermented malt beverages) are beverages with high content of purines due to the use of malt. However, adding the food composition according to an embodiment of the present invention in the production process of a beer-taste beverage can effectively lower the purine content even though malt is used in high ratio.

2. Processed food to be produced

In an embodiment of the present invention, the processed food to be produced is a food obtained by applying a certain processing to a natural food material, and examples include processed foods belonging to middle classifications 72 to 76 in the Standard Commodity Classification for Japan revised in June 1990 (however, excluding ice and manufactured tobacco belonging to middle classification 76).

In an embodiment of the present invention, examples of the processed food to be produced include processed vegetable products (such as canned vegetables, bottled vegetables, processed tomato products, processed mushroom products, salt-preserved vegetables, pickled vegetables, frozen vegetable food, dried vegetables, and vegetables boiled in soy sauce), processed fruit products (such as canned fruits, bottled fruits, fruit beverage raw materials, jam, marmalade, fruit butter, pickled fruits, dried fruits, and frozen fruit food), tea products, coffee products, cocoa products, spices, noodles, breads, confectionery, cooked legume products (such as sweet bean paste products, boiled legume products, tofu, deep-fried tofu products, tofu skin, freeze dried tofu, fermented soy beans, roasted soybean flour, soy milk products, peanut products, and roasted beans), konjac jelly, meat products (such as processed meat products, canned game meat, bottled game meat, and frozen game meat food), dairy products (such as liquid milk, cream, condensed milk, concentrated milk, powdered milk, skimmed milk, skimmed concentrated milk, fermented milk, lactic acid bacteria beverages, butter, cheese, curd, whey, ice creams, lactose, casein preparations, and food made from milk or the like as a main raw material), processed egg products (such as liquid chicken egg, powdered chicken egg, processed frozen chicken egg products, processed products of duck eggs, and processed products of quail eggs), processed fish and shellfish (such as dried fish and shellfish, salted and dried fish and shellfish, boiled dried fish and shellfish, salt-preserved fish and shellfish, canned fish and shellfish, frozen fish and shellfish, frozen aquatic food, fish paste products, smoked fish and shellfish, dried and fermented fish, dried fermented fish flakes, salted and fermented fish and guts, aquatic products boiled in soy sauce, pickled aquatic products, and seasoned processed aquatic products), processed seaweeds (such as processed kelp products, processed laver products, processed wakame seaweed (*Undaria pinnatifida*) products, processed hiziki (*Hizikia fusiformis*), agar, salt-preserved seaweeds, frozen seaweed food, and dried seaweeds for producing agar), seasonings (such as common salt, miso, soy sauce, sauce, vinegar, Wafu Dashi no Moto (powdered Japanese soup stock), consomme cubes, umami seasonings, flavor seasonings, curry roux, soup for noodles or the like, and sauce for grilled meat), soup, dried soup, edible oils and/or fats (such as edible vegetable oils and/or fats, edible animal oils and fats, margarine, shortening, and processed oil and/or fat food), cooked food (such as cooked frozen food, chilled food, retort pouch food, boiled food, grilled food, deep-fried food, steamed food, dressed food, and cooked rice), yeast, baking powder, animal protein, seasoning vegetable protein, malts (such as malt, malt extract, and malt syrup), aromatic syrup extract, aromatic syrup concentrate, aromatic syrup paste, aromatic syrup powder, powdered juice, drinking water, sparkling soft drinks (such as carbonated water; cola drinks; carbonated drinks containing juice, such as fruit juice or vegetable juice; juice-flavored carbonated drinks (such as fruit juice-flavored carbonated drinks and vegetable juice-flavored carbonated drinks); fruit-colored carbonated drinks; carbonated drinks containing milk or the like, and non-alcoholic beer-taste beverages), non-sparkling soft drinks (such as fruit drinks, vegetable drinks, juice drinks of fruit juice, vegetable juice, or the like, juice-flavored drinks (such as fruit juice-flavored drinks and vegetable juice-flavored drinks), fruit pulp drinks, flavored drinks, flavored syrups, acid drinks made from milk or a dairy product, coffee drinks, caffeine drinks, tea-based drinks, and drinks of soy milk or the like), alcoholic beverages (such as beer-taste beverages, liqueurs, wine (grape wine), fruit liquor, refined sake, low-malt beer, unrefined sake, distilled liquor, hard liquor, shochu, sake, shaoxing wine, whiskey, brandy, rum, gin, vodka, tequila, makgeolli, and shochu highball).

The processed food according to an embodiment of the present invention may be a fermented food produced through a fermentation step or may be a non-fermented food produced without undergoing a fermentation step.

The processed food according to an embodiment of the present invention may be a processed food containing a functional component or may be a processed food with a limited content of a functional component.

In the present specification, the functional component refers to an organic or inorganic component that is generally not a nutrient essential for vital activity but is expected to have various functional effects, such as a health

maintenance effect, an antioxidant effect, and an alleviating effect on the action of hazardous substances, such as carcinogens. These components are incorporated into the processed food and can be supplied as nutritional components that serve the regulatory functions of the living body.

The content of the functional component contained in the processed food with a limited content of the functional component may be less than 1 mass%, less than 7500 mass ppm, less than 5000 mass ppm, less than 2500 mass ppm, less than 1000 mass ppm, less than 750 mass ppm, less than 500 mass ppm, less than 250 mass ppm, less than 100 mass ppm, less than 10 mass ppm, less than 1.0 mass ppm, less than 100 mass ppb, less than 75 mass ppm, less than 50 mass ppm, less than 25 mass ppm, less than 10 mass ppb, less than 1 mass ppb, or less than 0.1 mass ppb based on the total amount (100 mass%) of the processed food.

In an embodiment of the present invention, the processed food to be produced is a beverage.

The beverage to be produced may be a fermented beverage produced through a fermentation step using yeast or may be a non-fermented beverage.

The beverage to be produced may be a sweet beverage or a non-sweet beverage.

The beverage to be produced may be an extracted beverage, such as tea or coffee, or may be a non-extracted beverage.

The beverage to be produced may be a milk beverage containing raw milk, powdered milk, or the like, or may be a non-milk beverage.

The beverage to be produced may be an alcoholic beverage with an alcoholic strength of 1.0 (v/v)% or more or may be a non-alcoholic beverage with an alcoholic strength of less than 1.0 (v/v)%.

The alcoholic strength of the alcoholic beverage to be produced may be 1.0 (v/v)% or more, 1.2 (v/v)% or more, 1.4 (v/v)% or more, 1.5 (v/v)% or more, 1.6 (v/v)% or more, 1.8 (v/v)% or more, 2.0 (v/v)% or more, 2.2 (v/v)% or more, 2.4 (v/v)% or more, 2.5 (v/v)% or more, 2.6 (v/v)% or more, 2.8 (v/v)% or more, 3.0 (v/v)% or more, 3.2 (v/v)% or more, 3.4 (v/v)% or more, 3.5 (v/v)% or more, 3.6 (v/v)% or more, 3.8 (v/v)% or more, 4.0 (v/v)% or more, 4.2 (v/v)% or more, 4.4 (v/v)% or more, 4.5 (v/v)% or more, 4.6 (v/v)% or more, 4.8 (v/v)% or more, 5.0 (v/v)% or more, 5.2 (v/v)% or more, 5.4 (v/v)% or more, 5.6 (v/v)% or more, 5.7 (v/v)% or more, 5.8 (v/v)% or more, 6.0 (v/v)% or more, 6.2 (v/v)% or more, 6.4 (v/v)% or more, 6.6 (v/v)% or more, 6.8 (v/v)% or more, 7.0 (v/v)% or more, 7.2 (v/v)% or more, 7.4 (v/v)% or more, 7.6 (v/v)% or more, 7.8 (v/v)% or more, 8.0 (v/v)% or more, 8.2 (v/v)% or more, 8.4 (v/v)% or more, 8.6 (v/v)% or more, 8.8 (v/v)% or more, 9.0 (v/v)% or more, 9.2 (v/v)% or more, 9.4 (v/v)% or more, 9.6 (v/v)% or more, 9.8 (v/v)% or more, 10.0 (v/v)% or more, or 15.0 (v/v)% or more, and may be 99.0 (v/v)% or less, 90.0 (v/v)% or less, 80.0 (v/v)% or less, 70.0 (v/v)% or less, 60.0 (v/v)% or less, 50.0 (v/v)% or less, 40.0 (v/v)% or less, 30.0 (v/v)% or less, 25.0 (v/v)% or less, 20.0 (v/v)% or less, 19.8 (v/v)% or less, 19.6 (v/v)% or less, 19.4 (v/v)% or less, 19.2 (v/v)% or less, 19.0 (v/v)% or less, 18.8 (v/v)% or less, 18.6 (v/v)% or less, 18.4 (v/v)% or less, 18.2 (v/v)% or less, 18.0 (v/v)% or less, 17.8 (v/v)% or less, 17.6 (v/v)% or less, 17.4 (v/v)% or less, 17.2 (v/v)% or less, 17.0 (v/v)% or less, 16.8 (v/v)% or less, 16.6 (v/v)% or less, 16.4 (v/v)% or less, 16.2 (v/v)% or less, 16.0 (v/v)% or less, 15.8 (v/v)% or less, 15.6 (v/v)% or less, 15.4 (v/v)% or less, 15.2 (v/v)% or less, 15.0 (v/v)% or less, 14.8 (v/v)% or less, 14.6 (v/v)% or less, 14.4 (v/v)% or less, 14.2 (v/v)% or less, 14.0 (v/v)% or less, 13.8 (v/v)% or less, 13.6 (v/v)% or less, 13.4 (v/v)% or less, 13.2 (v/v)% or less, 13.0 (v/v)% or less, 12.8 (v/v)% or less, 12.6 (v/v)% or less, 12.4 (v/v)% or less, 12.2 (v/v)% or less, 12.0 (v/v)% or less, 11.8 (v/v)% or less, 11.6 (v/v)% or less, 11.4 (v/v)% or less, 11.2 (v/v)% or less, 11.0 (v/v)% or less, 10.8 (v/v)% or less, 10.6 (v/v)% or less, 10.4 (v/v)% or less, 10.2 (v/v)% or less, 10.0 (v/v)% or less, 9.8 (v/v)% or less, 9.6 (v/v)% or less, 9.4 (v/v)% or less, 9.2 (v/v)% or less, 9.0 (v/v)% or less, 8.8 (v/v)% or less, 8.6 (v/v)% or less, 8.4 (v/v)% or less, 8.2 (v/v)% or less, 8.0 (v/v)% or less, 7.8 (v/v)% or less, 7.6 (v/v)% or less, 7.4 (v/v)% or less, 7.2 (v/v)% or less, 7.0 (v/v)% or less, 6.8 (v/v)% or less, 6.6 (v/v)% or less, 6.4 (v/v)% or less, 6.2 (v/v)% or less, 6.0 (v/v)% or less, 5.8 (v/v)% or less, 5.6 (v/v)% or less, 5.4 (v/v)% or less, 5.2 (v/v)% or less, 5.0 (v/v)% or less, 4.8 (v/v)% or less, 4.6 (v/v)% or less, 4.4 (v/v)% or less, 4.2 (v/v)% or less, 4.0 (v/v)% or less, 3.8 (v/v)% or less, 3.6 (v/v)% or less, 3.4 (v/v)% or less, 3.2 (v/v)% or less, 3.0 (v/v)% or less, 2.8 (v/v)% or less, 2.6 (v/v)% or less, 2.4 (v/v)% or less, 2.2 (v/v)% or less, 2.0 (v/v)% or less, 1.8 (v/v)% or less, 1.6 (v/v)% or less, 1.4 (v/v)% or less, or 1.2 (v/v)% or less.

The alcoholic strength of the non-alcoholic beverage to be produced may be less than 1.0 (v/v)%, 0.9 (v/v)% or less, 0.8 (v/v)% or less, 0.7 (v/v)% or less, 0.6 (v/v)% or less, 0.5 (v/v)% or less, 0.4 (v/v)% or less, 0.3 (v/v)% or less, 0.2 (v/v)% or less, 0.1 (v/v)% or less, 0.05 (v/v)% or less, 0.01 (v/v)% or less, 0.0050 (v/v)% or less, or 0.0025 (v/v)% or less, or the non-alcoholic beverage may be a non-alcoholic beverage substantially free of alcohol.

The "non-alcoholic beverage substantially free of alcohol" does not exclude beverages containing a trace amount of alcohol that is undetectable. The non-alcoholic beverage also includes beverages whose alcoholic strength is 0 (v/v)% when the value is rounded off to the integer, beverages whose alcoholic strength is 0.0 (v/v)% when the value is rounded off to the first decimal place, and beverages whose alcoholic strength is 0.00 (v/v)% when the value is rounded off to the second decimal place.

In addition, the non-alcoholic beverage to be produced in an embodiment of the present invention may be a beverage with an alcoholic strength of 0.1 (v/v)% or more and less than 1.0 (v/v)%, 0.2 (v/v)% or more and less than 1.0 (v/v)%, 0.3 (v/v)% or more and less than 1.0 (v/v)%, 0.4 (v/v)% or more and less than 1.0 (v/v)%, 0.5 (v/v)% or more

and less than 1.0 (v/v)%, 0.6 (v/v)% or more and less than 1.0 (v/v)%, 0.7 (v/v)% or more and less than 1.0 (v/v)%, 0.8 (v/v)% or more and less than 1.0 (v/v)%, or 0.9 (v/v)% or more and less than 1.0 (v/v)%.

The non-alcoholic beverage may be a non-sweet beverage, such as a non-alcoholic beer-taste beverage, or may be a sweet beverage, such as a soft drink.

In the present specification, the "alcoholic strength" or "alcohol content" refers to a content of ethanol and does not include aliphatic alcohols.

In addition, in the present specification, the "alcoholic strength" or "alcohol content" is expressed as a volume/volume percentage ((v/v)%) and can be measured by any known method, for example, with a vibrating densimeter. Specifically, the alcoholic strength can be determined by preparing a sample from the beverage by removing carbonic acid gas through filtration or with ultrasonication, distilling the sample over direct heat, measuring the density of the resulting distillate at 15°C, and converting the density using "Table 2. Conversion Table of Alcohol Content, Density (15°C), and Specific Gravity (15/15°C)", which is an attached table of the Official Analysis Method of the National Tax Agency (H19 National Tax Agency Order No. 6, revised on June 22, 2007). In addition, a non-alcoholic beverage with an alcoholic strength of less than 1.0 (v/v)% can also be measured using a commercially available alcohol measuring device or gas chromatography.

In an embodiment of the present invention, the beverage to be produced may be a beer-taste beverage.

In the present specification, the "beer-taste beverage" refers to an alcohol-containing or non-alcoholic carbonated beverage with a beer-like flavor. Thus, the "beer-taste beverage" includes not only beer that is a fermented malt beverage obtained by fermenting malt, water, and, as necessary, hop or the like as raw materials using yeast but also carbonated beverages with a beer flavor. That is, in the present specification, unless otherwise noted, the "beer-taste beverage" also includes any carbonated beverage to which a beer flavoring containing an ester or a higher alcohol (e.g., isoamyl acetate, ethyl acetate, n-propanol, isobutanol, acetaldehyde, ethyl caproate, linalool, or 4-vinylguaiacol) is added and which has a beer flavor.

In addition, the beer-taste beverage may be a fermented beer-taste beverage that has undergone a yeast-based fermentation step or may be a non-fermented beer-taste beverage that has not undergone a fermentation step.

Furthermore, the beer-taste beverage may be an alcohol-containing beer-taste beverage with an alcoholic strength of 1.0 (v/v)% or more or may be a non-alcoholic beer-taste beverage with an alcoholic strength of less than 1.0 (v/v)%.

The alcoholic strength of the alcohol-containing beer-taste beverage may be 1.0 (v/v)% or more, 1.5 (v/v)% or more, 2.0 (v/v)% or more, 2.5 (v/v)% or more, 3.0 (v/v)% or more, 3.5 (v/v)% or more, 4.0 (v/v)% or more, 4.5 (v/v)% or more, 5.0 (v/v)% or more, 5.4 (v/v)% or more, or 5.7 (v/v)% or more from the viewpoint of making a beverage that can give a refreshing and stimulating feeling, and may be 20.0 (v/v)% or less, 17.0 (v/v)% or less, 15.0 (v/v)% or less, 12.0 (v/v)% or less, 10.0 (v/v)% or less, 9.0 (v/v)% or less, 8.0 (v/v)% or less, or 7.0 (v/v)% or less from the viewpoint of making a beer-taste beverage that is quaffable.

The alcoholic strength of the non-alcoholic beverage may be less than 1.0 (v/v)%, 0.9 (v/v)% or less, 0.8 (v/v)% or less, 0.7 (v/v)% or less, 0.6 (v/v)% or less, 0.5 (v/v)% or less, 0.4 (v/v)% or less, 0.3 (v/v)% or less, 0.2 (v/v)% or less, 0.1 (v/v)% or less, 0.05 (v/v)% or less, 0.01 (v/v)% or less, 0.0050 (v/v)% or less, or 0.0025 (v/v)% or less, or the non-alcoholic beverage may be a non-alcoholic beer-taste beverage substantially free of alcohol.

The "non-alcoholic beer-taste beverage substantially free of alcohol" does not exclude beverages containing a trace amount of alcohol that is undetectable. The non-alcoholic beer-taste beverage also includes beverages whose alcoholic strength is 0 (v/v)% when the value is rounded off to the integer, beverages whose alcoholic strength is 0.0 (v/v)% when the value is rounded off to the first decimal place, and beverages whose alcoholic strength is 0.00 (v/v)% when the value is rounded off to the second decimal place.

In addition, the non-alcoholic beer-taste beverage may be a beverage with an alcoholic strength of 0.1 (v/v)% or more and less than 1.0 (v/v)%, 0.2 (v/v)% or more and less than 1.0 (v/v)%, 0.3 (v/v)% or more and less than 1.0 (v/v)%, 0.4 (v/v)% or more and less than 1.0 (v/v)%, 0.5 (v/v)% or more and less than 1.0 (v/v)%, 0.6 (v/v)% or more and less than 1.0 (v/v)%, 0.7 (v/v)% or more and less than 1.0 (v/v)%, 0.8 (v/v)% or more and less than 1.0 (v/v)%, or 0.9 (v/v)% or more and less than 1.0 (v/v)%.

The non-alcoholic beer-taste beverage may be a non-alcoholic fermented beer-taste beverage produced by removing the alcohol produced in the fermentation step after the fermentation step, may be a beverage produced by stopping the fermentation at a stage where the alcoholic strength is less than 1.0 (v/v)% in the yeast-based fermentation step, or may be a non-alcoholic non-fermented beer-taste beverage prepared to have a beer-like flavor without performing a fermentation step.

In addition, the beer-taste beverage may be a beer-taste malt beverage made using malt as a raw material or may be a beer-taste malt-free beverage made without using malt. The beer-taste beverage is preferably a beer-taste malt beverage and more preferably a beer-taste barley malt beverage.

Furthermore, the beer-taste beverage may be an ale beer-taste beverage brewed through a fermentation step using top-fermenting yeast or may be a lager beer-taste beverage brewed through a fermentation step using bottom-fermenting yeast.

Moreover, the beer-taste beverage may be a distilled liquor-containing beer-taste beverage containing a distilled liquor, such as spirits, whiskey, or shochu, and among them, a spirits-containing beer-taste beverage is preferred.

Still more, the beer-taste beverage may be a distilled liquor-free beer-taste beverage containing no distilled liquor or may be a spirits-free beer-taste beverage containing no spirits.

The beer-taste beverage according to a specific embodiment of the present invention may be a fermented beer-taste beverage, may be an alcohol-containing fermented beer-taste beverage, or may be a fermented beer-taste malt beverage.

In the case where the processed food to be produced is a beer-taste beverage, from the viewpoint of making a beverage with excellent taste typical of a beer-taste beverage, the malt ratio may be 10 mass% or more, 11 mass% or more, 12 mass% or more, 13 mass% or more, 14 mass% or more, 15 mass% or more, 16 mass% or more, 17 mass% or more, 18 mass% or more, 19 mass% or more, 20 mass% or more, 21 mass% or more, 22 mass% or more, 23 mass% or more, 24 mass% or more, 25 mass% or more, 26 mass% or more, 27 mass% or more, 28 mass% or more, 29 mass% or more, 30 mass% or more, 31 mass% or more, 32 mass% or more, 33 mass% or more, 34 mass% or more, 35 mass% or more, 36 mass% or more, 37 mass% or more, 38 mass% or more, 39 mass% or more, 40 mass% or more, 41 mass% or more, 42 mass% or more, 43 mass% or more, 44 mass% or more, 45 mass% or more, 46 mass% or more, 47 mass% or more, 48 mass% or more, 49 mass% or more, 50 mass% or more, 51 mass% or more, 52 mass% or more, 53 mass% or more, 54 mass% or more, 55 mass% or more, 56 mass% or more, 57 mass% or more, 58 mass% or more, 59 mass% or more, 60 mass% or more, 61 mass% or more, 62 mass% or more, 63 mass% or more, 64 mass% or more, 65 mass% or more, 66 mass% or more, 67 mass% or more, 68 mass% or more, 69 mass% or more, 70 mass% or more, 71 mass% or more, 72 mass% or more, 73 mass% or more, 74 mass% or more, 75 mass% or more, 76 mass% or more, 77 mass% or more, 78 mass% or more, 79 mass% or more, 80 mass% or more, 81 mass% or more, 82 mass% or more, 83 mass% or more, 84 mass% or more, 85 mass% or more, 86 mass% or more, 87 mass% or more, 88 mass% or more, 89 mass% or more, 90 mass% or more, 91 mass% or more, 92 mass% or more, 93 mass% or more, 94 mass% or more, 95 mass% or more, 96 mass% or more, 97 mass% or more, 98 mass% or more, or 99 mass% or more, and is 100 mass% or less, but from the viewpoint of making a beer-taste beverage that is quaffable, the malt ratio may be less than 100 mass%, 90 mass% or less, 89 mass% or less, 88 mass% or less, 87 mass% or less, 86 mass% or less, 85 mass% or less, 84 mass% or less, 83 mass% or less, 82 mass% or less, 81 mass% or less, 80 mass% or less, 79 mass% or less, 78 mass% or less, 77 mass% or less, 76 mass% or less, 75 mass% or less, 74 mass% or less, 73 mass% or less, 72 mass% or less, 71 mass% or less, 70 mass% or less, 69 mass% or less, 68 mass% or less, 67 mass% or less, 66 mass% or less, 65 mass% or less, 64 mass% or less, 63 mass% or less, 62 mass% or less, 61 mass% or less, 60 mass% or less, 59 mass% or less, 58 mass% or less, 57 mass% or less, 56 mass% or less, 55 mass% or less, 54 mass% or less, 53 mass% or less, 52 mass% or less, 51 mass% or less, 50 mass% or less, 49 mass% or less, 48 mass% or less, 47 mass% or less, 46 mass% or less, 45 mass% or less, 44 mass% or less, 43 mass% or less, 42 mass% or less, 41 mass% or less, 40 mass% or less, 39 mass% or less, 38 mass% or less, 37 mass% or less, 36 mass% or less, 35 mass% or less, 34 mass% or less, 33 mass% or less, 32 mass% or less, 31 mass% or less, 30 mass% or less, 29 mass% or less, 28 mass% or less, 27 mass% or less, 26 mass% or less, 25 mass% or less, 24 mass% or less, 23 mass% or less, 22 mass% or less, 21 mass% or less, 20 mass% or less, 19 mass% or less, 18 mass% or less, 17 mass% or less, 16 mass% or less, 15 mass% or less, 14 mass% or less, 13 mass% or less, 12 mass% or less, or 11 mass% or less.

In the present specification, the "malt ratio" means a value calculated according to the Interpretation Notice on the Liquor Tax Law and the Administrative Ordinance Related to Alcoholic Beverages and the like enforced on April 1, 2018.

In the case where the processed food according to an embodiment of the present invention is a beer-taste beverage, the content of free amino nitrogen (FAN) may be 0.1 mg/100 mL or more, 0.3 mg/100 mL or more, 0.5 mg/100 mL or more, 0.7 mg/100 mL or more, 1.0 mg/100 mL or more, 1.5 mg/100 mL or more, 2.0 mg/100 mL or more, 2.5 mg/100 mL or more, 3.0 mg/100 mL or more, 3.5 mg/100 mL or more, 4.0 mg/100 mL or more, 4.5 mg/100 mL or more, 5.0 mg/100 mL or more, 5.5 mg/100 mL or more, 6.0 mg/100 mL or more, 6.5 mg/100 mL or more, 7.0 mg/100 mL or more, 7.5 mg/100 mL or more, 8.0 mg/100 mL or more, 8.5 mg/100 mL or more, 9.0 mg/100 mL or more, 9.5 mg/100 mL or more, 10.0 mg/100 mL or more, or 10.5 mg/100 mL or more, and may be 40.0 mg/100 mL or less, 35.0 mg/100 mL or less, 30.0 mg/100 mL or less, 29.0 mg/100 mL or less, 28.0 mg/100 mL or less, 27.0 mg/100 mL or less, 26.0 mg/100 mL or less, 25.0 mg/100 mL or less, 24.0 mg/100 mL or less, 23.0 mg/100 mL or less, 22.0 mg/100 mL or less, 21.0 mg/100 mL or less, 20.0 mg/100 mL or less, 19.0 mg/100 mL or less, 18.0 mg/100 mL or less, 17.0 mg/100 mL or less, 16.0 mg/100 mL or less, 15.0 mg/100 mL or less, 14.0 mg/100 mL or less, 13.0 mg/100 mL or less, 12.0 mg/100 mL or less, or 11.0 mg/100 mL or less.

The content of FAN can be adjusted by appropriately setting the addition of diluting water or carbonated water, the types of raw materials (such as malt, corn grits, and sugar solution), the amounts of raw materials, the type of enzyme, the amount of enzyme added (also including a proteolytic enzyme), the timing of enzyme addition, the time for proteolysis

in a preparation tank, the pH in a preparation tank, the pH in the preparation step (wort production step from feeding of malt until before addition of yeast), the time for wort filtration, the set temperature and holding time in each temperature region in preparation of wort, the boiling time and pH in the boiling step, the original wort extract concentration in the pre-fermentation liquid, the original wort extract concentration in the fermentation step, the fermentation conditions (such as the oxygen concentration, aeration conditions, yeast species, amount of yeast added, the number of yeast grown, removal timing of yeast, fermentation temperature, fermentation time, pressure setting, and carbon dioxide concentration), and the like.

In addition, in the present specification, the content of FAN can be measured, for example, by a method described in 8.18 Free Amino Nitrogen of Revised BCOJ Beer Analysis Method (published by Public Interest Incorporated Foundation, The Brewing Society of Japan, edited by [Analysis Committee] Brewery Convention of Japan, Brewers Association of Japan, Enlarged and Revised Edition of 2013).

In the case where the processed food according to an embodiment of the present invention is a beer-taste beverage, the apparent fermentation degree may be 0% or more, 5% or more, 10% or more, 15% or more, 20% or more, 25% or more, 30% or more, 35% or more, 40% or more, or 50% or more, and may be 120% or less, 115% or less, 110% or less, 105% or less, 100% or less, 95% or less, 90% or less, 85% or less, 80% or less, 75% or less, 70% or less, 65% or less, 60% or less, or 55% or less.

The apparent fermentation degree can be adjusted by appropriately setting the addition of diluting water or carbonated water, the types of raw materials (such as malt, corn grits, and sugar solution), the amounts of raw materials, the type of enzyme, the amount of enzyme added (also including a saccharolytic enzyme or an isomerase), the temperature in enzymatic reaction, the timing of enzyme addition, the saccharification time, the pH during saccharification, the temperature during saccharification, the pH in the preparation step (wort production step from feeding of malt until before addition of yeast), the temperature in the preparation step, the time for wort filtration, the set temperature and holding time in each temperature region in preparation of wort (including during saccharification), the original wort extract concentration in the pre-fermentation liquid, the original wort extract concentration in the fermentation step, the fermentation conditions (such as the oxygen concentration, aeration conditions, yeast species, amount of yeast added, the number of yeast grown, removal timing of yeast, fermentation temperature, fermentation time, pressure setting, and carbon dioxide concentration), and the like.

In the present specification, the "apparent fermentation degree" means the ratio of the concentration of sugar that can be consumed by yeast as a nutrient source for alcoholic fermentation to the total concentration of sugar contained in the pre-fermentation liquid. For example, the apparent fermentation degree AA of the beer-taste beverage can be calculated from Equation (1) below.

$$\text{Equation (1): } AA\ (\%) = 100 \times (P - Es)/P$$

In Equation (1) above, "P" is an original extract (original wort extract) concentration and can be measured by the method described in "BCOJ Beer Analysis Method" (published by The Brewing Society of Japan, edited by Brewers Association of Japan, revised edition of November 1, 2004).

In addition, "Es" represents an apparent extract concentration of the beer-taste beverage. The apparent extract concentration can be calculated, for example, from Equation (2) below as described in "BCOJ Beer Analysis Method" (published by The Brewing Society of Japan, edited by Brewers Association of Japan, revised edition of November 1, 2004).

$$\text{Equation (2): } Es = -460.234 + 662.649 \times D - 202.414 \times D^2$$

where D is the specific gravity of a degassed beer-taste beverage.

The apparent extract concentration "Es" may have a negative value depending on D in Equation (2) above, and thus the calculated apparent fermentation degree may exceed 100%.

In the case where the processed food according to an embodiment of the present invention is a beer-taste beverage, the sugar content may be 0.1 g/100 mL or more, 0.2 g/100 mL or more, 0.3 g/100 mL or more, 0.4 g/100 mL or more, 0.5 g/100 mL or more, 0.6 g/100 mL or more, 0.7 g/100 mL or more, 0.8 g/100 mL or more, 0.9 g/100 mL or more, 1.0 g/100 mL or more, 1.1 g/100 mL or more, 1.2 g/100 mL or more, 1.3 g/100 mL or more, 1.4 g/100 mL or more, 1.5 g/100 mL or more, 1.6 g/100 mL or more, 1.7 g/100 mL or more, 1.8 g/100 mL or more, 1.9 g/100 mL or more, 2.0 g/100 mL or more, 2.1 g/100 mL or more, 2.2 g/100 mL or more, 2.3 g/100 mL or more, 2.4 g/100 mL or more, 2.5 g/100 mL or more, 2.6 g/100 mL or more, 2.7 g/100 mL or more, 2.8 g/100 mL or more, 2.9 g/100 mL or more, 3.0 g/100 mL or more, 3.1 g/100 mL or more, 3.2 g/100 mL or more, 3.3 g/100 mL or more, 3.4 g/100 mL or more, 3.5 g/100 mL or more, 3.6 g/100 mL or more, 3.7 g/100 mL or more, 3.8 g/100 mL or more, 3.9 g/100 mL or more, 4.0 g/100 mL or more,

4.1 g/100 mL or more, 4.2 g/100 mL or more, 4.3 g/100 mL or more, 4.4 g/100 mL or more, 4.5 g/100 mL or more, 4.6 g/100 mL or more, 4.7 g/100 mL or more, 4.8 g/100 mL or more, 4.9 g/100 mL or more, 5.0 g/100 mL or more, 5.1 g/100 mL or more, 5.2 g/100 mL or more, 5.3 g/100 mL or more, 5.4 g/100 mL or more, 5.5 g/100 mL or more, 5.6 g/100 mL or more, 5.7 g/100 mL or more, 5.8 g/100 mL or more, 5.9 g/100 mL or more, 6.0 g/100 mL or more, 6.1 g/100 mL or more, 6.2 g/100 mL or more, 6.3 g/100 mL or more, 6.4 g/100 mL or more, 6.5 g/100 mL or more, 6.6 g/100 mL or more, 6.7 g/100 mL or more, 6.8 g/100 mL or more, 6.9 g/100 mL or more, 7.0 g/100 mL or more, 7.1 g/100 mL or more, 7.2 g/100 mL or more, 7.3 g/100 mL or more, 7.4 g/100 mL or more, 7.5 g/100 mL or more, 7.6 g/100 mL or more, 7.7 g/100 mL or more, 7.8 g/100 mL or more, 7.9 g/100 mL or more, 8.0 g/100 mL or more, 8.1 g/100 mL or more, 8.2 g/100 mL or more, 8.3 g/100 mL or more, 8.4 g/100 mL or more, 8.5 g/100 mL or more, 8.6 g/100 mL or more, 8.7 g/100 mL or more, 8.8 g/100 mL or more, 8.9 g/100 mL or more, 9.0 g/100 mL or more, 9.1 g/100 mL or more, 9.2 g/100 mL or more, 9.3 g/100 mL or more, 9.4 g/100 mL or more, 9.5 g/100 mL or more, 9.6 g/100 mL or more, 9.7 g/100 mL or more, 9.8 g/100 mL or more, 9.9 g/100 mL or more, 10.0 g/100 mL or more, 10.1 g/100 mL or more, 10.2 g/100 mL or more, 10.3 g/100 mL or more, 10.4 g/100 mL or more, 10.5 g/100 mL or more, 10.6 g/100 mL or more, 10.7 g/100 mL or more, 10.8 g/100 mL or more, 10.9 g/100 mL or more, 11.0 g/100 mL or more, 11.1 g/100 mL or more, 11.2 g/100 mL or more, 11.3 g/100 mL or more, 11.4 g/100 mL or more, 11.5 g/100 mL or more, 11.6 g/100 mL or more, 11.7 g/100 mL or more, 11.8 g/100 mL or more, 11.9 g/100 mL or more, 12.0 g/100 mL or more, 12.1 g/100 mL or more, 12.2 g/100 mL or more, 12.3 g/100 mL or more, 12.4 g/100 mL or more, 12.5 g/100 mL or more, 12.6 g/100 mL or more, 12.7 g/100 mL or more, 12.8 g/100 mL or more, 12.9 g/100 mL or more, 13.0 g/100 mL or more, 13.1 g/100 mL or more, 13.2 g/100 mL or more, 13.3 g/100 mL or more, 13.4 g/100 mL or more, 13.5 g/100 mL or more, 13.6 g/100 mL or more, 13.7 g/100 mL or more, 13.8 g/100 mL or more, 13.9 g/100 mL or more, 14.0 g/100 mL or more, 14.1 g/100 mL or more, 14.2 g/100 mL or more, 14.3 g/100 mL or more, 14.4 g/100 mL or more, 14.5 g/100 mL or more, 14.6 g/100 mL or more, 14.7 g/100 mL or more, 14.8 g/100 mL or more, 14.9 g/100 mL or more, 15.0 g/100 mL or more, 15.1 g/100 mL or more, 15.2 g/100 mL or more, 15.3 g/100 mL or more, 15.4 g/100 mL or more, 15.5 g/100 mL or more, 15.6 g/100 mL or more, 15.7 g/100 mL or more, 15.8 g/100 mL or more, 15.9 g/100 mL or more, 16.0 g/100 mL or more, 16.1 g/100 mL or more, 16.2 g/100 mL or more, 16.3 g/100 mL or more, 16.4 g/100 mL or more, 16.5 g/100 mL or more, 16.6 g/100 mL or more, 16.7 g/100 mL or more, 16.8 g/100 mL or more, 16.9 g/100 mL or more, 17.0 g/100 mL or more, 17.1 g/100 mL or more, 17.2 g/100 mL or more, 17.3 g/100 mL or more, 17.4 g/100 mL or more, 17.5 g/100 mL or more, 17.6 g/100 mL or more, 17.7 g/100 mL or more, 17.8 g/100 mL or more, 17.9 g/100 mL or more, 18.0 g/100 mL or more, 18.1 g/100 mL or more, 18.2 g/100 mL or more, 18.3 g/100 mL or more, 18.4 g/100 mL or more, 18.5 g/100 mL or more, 18.6 g/100 mL or more, 18.7 g/100 mL or more, 18.8 g/100 mL or more, 18.9 g/100 mL or more, 19.0 g/100 mL or more, 19.1 g/100 mL or more, 19.2 g/100 mL or more, 19.3 g/100 mL or more, 19.4 g/100 mL or more, 19.5 g/100 mL or more, 19.6 g/100 mL or more, 19.7 g/100 mL or more, 19.8 g/100 mL or more, or 19.9 g/100 mL or more, and may be 20 g/100 mL or less, 19.9 g/100 mL or less, 19.8 g/100 mL or less, 19.7 g/100 mL or less, 19.6 g/100 mL or less, 19.5 g/100 mL or less, 19.4 g/100 mL or less, 19.3 g/100 mL or less, 19.2 g/100 mL or less, 19.1 g/100 mL or less, 19 g/100 mL or less, 18.9 g/100 mL or less, 18.8 g/100 mL or less, 18.7 g/100 mL or less, 18.6 g/100 mL or less, 18.5 g/100 mL or less, 18.4 g/100 mL or less, 18.3 g/100 mL or less, 18.2 g/100 mL or less, 18.1 g/100 mL or less, 18 g/100 mL or less, 17.9 g/100 mL or less, 17.8 g/100 mL or less, 17.7 g/100 mL or less, 17.6 g/100 mL or less, 17.5 g/100 mL or less, 17.4 g/100 mL or less, 17.3 g/100 mL or less, 17.2 g/100 mL or less, 17.1 g/100 mL or less, 17 g/100 mL or less, 16.9 g/100 mL or less, 16.8 g/100 mL or less, 16.7 g/100 mL or less, 16.6 g/100 mL or less, 16.5 g/100 mL or less, 16.4 g/100 mL or less, 16.3 g/100 mL or less, 16.2 g/100 mL or less, 16.1 g/100 mL or less, 16 g/100 mL or less, 15.9 g/100 mL or less, 15.8 g/100 mL or less, 15.7 g/100 mL or less, 15.6 g/100 mL or less, 15.5 g/100 mL or less, 15.4 g/100 mL or less, 15.3 g/100 mL or less, 15.2 g/100 mL or less, 15.1 g/100 mL or less, 15 g/100 mL or less, 14.9 g/100 mL or less, 14.8 g/100 mL or less, 14.7 g/100 mL or less, 14.6 g/100 mL or less, 14.5 g/100 mL or less, 14.4 g/100 mL or less, 14.3 g/100 mL or less, 14.2 g/100 mL or less, 14.1 g/100 mL or less, 14 g/100 mL or less, 13.9 g/100 mL or less, 13.8 g/100 mL or less, 13.7 g/100 mL or less, 13.6 g/100 mL or less, 13.5 g/100 mL or less, 13.4 g/100 mL or less, 13.3 g/100 mL or less, 13.2 g/100 mL or less, 13.1 g/100 mL or less, 13 g/100 mL or less, 12.9 g/100 mL or less, 12.8 g/100 mL or less, 12.7 g/100 mL or less, 12.6 g/100 mL or less, 12.5 g/100 mL or less, 12.4 g/100 mL or less, 12.3 g/100 mL or less, 12.2 g/100 mL or less, 12.1 g/100 mL or less, 12 g/100 mL or less, 11.9 g/100 mL or less, 11.8 g/100 mL or less, 11.7 g/100 mL or less, 11.6 g/100 mL or less, 11.5 g/100 mL or less, 11.4 g/100 mL or less, 11.3 g/100 mL or less, 11.2 g/100 mL or less, 11.1 g/100 mL or less, 11 g/100 mL or less, 10.9 g/100 mL or less, 10.8 g/100 mL or less, 10.7 g/100 mL or less, 10.6 g/100 mL or less, 10.5 g/100 mL or less, 10.4 g/100 mL or less, 10.3 g/100 mL or less, 10.2 g/100 mL or less, 10.1 g/100 mL or less, 10 g/100 mL or less, 9.9 g/100 mL or less, 9.8 g/100 mL or less, 9.7 g/100 mL or less, 9.6 g/100 mL or less, 9.5 g/100 mL or less, 9.4 g/100 mL or less, 9.3 g/100 mL or less, 9.2 g/100 mL or less, 9.1 g/100 mL or less, 9.0 g/100 mL or less, 8.9 g/100 mL or less, 8.8 g/100 mL or less, 8.7 g/100 mL or less, 8.6 g/100 mL or less, 8.5 g/100 mL or less, 8.4 g/100 mL or less, 8.3 g/100 mL or less, 8.2 g/100 mL or less, 8.1 g/100 mL or less, 8.0 g/100 mL or less, 7.9 g/100 mL or less, 7.8 g/100 mL or less, 7.7 g/100 mL or less, 7.6 g/100 mL or less, 7.5 g/100 mL or less, 7.4 g/100 mL or less, 7.3 g/100 mL or less, 7.2 g/100 mL or less, 7.1 g/100 mL or less, 7.0 g/100 mL or less, 6.9 g/100 mL or less, 6.8 g/100 mL or less, 6.7 g/100 mL or less, 6.6 g/100 mL or less, 6.5 g/100 mL or less, 6.4 g/100 mL or less, 6.3 g/100 mL or less, 6.2 g/100 mL or less, 6.1 g/100 mL or less,

6.0 g/100 mL or less, 5.9 g/100 mL or less, 5.8 g/100 mL or less, 5.7 g/100 mL or less, 5.6 g/100 mL or less, 5.5 g/100 mL or less, 5.4 g/100 mL or less, 5.3 g/100 mL or less, 5.2 g/100 mL or less, 5.1 g/100 mL or less, 5.0 g/100 mL or less, 4.9 g/100 mL or less, 4.8 g/100 mL or less, 4.7 g/100 mL or less, 4.6 g/100 mL or less, 4.5 g/100 mL or less, 4.4 g/100 mL or less, 4.3 g/100 mL or less, 4.2 g/100 mL or less, 4.1 g/100 mL or less, 4.0 g/100 mL or less, 3.9 g/100 mL or less, 3.8 g/100 mL or less, 3.7 g/100 mL or less, 3.6 g/100 mL or less, 3.5 g/100 mL or less, 3.4 g/100 mL or less, 3.3 g/100 mL or less, 3.2 g/100 mL or less, 3.1 g/100 mL or less, 3.0 g/100 mL or less, 2.9 g/100 mL or less, 2.8 g/100 mL or less, 2.7 g/100 mL or less, 2.6 g/100 mL or less, 2.5 g/100 mL or less, 2.4 g/100 mL or less, 2.3 g/100 mL or less, 2.2 g/100 mL or less, 2.1 g/100 mL or less, or 2.0 g/100 mL or less.

In addition, the beer-taste beverage may be a low-sugar beverage or a sugar-free beverage, and the specific sugar content may be less than 2.0 g/100 mL, 1.9 g/100 mL or less, 1.8 g/100 mL or less, 1.7 g/100 mL or less, 1.6 g/100 mL or less, 1.5 g/100 mL or less, 1.4 g/100 mL or less, 1.3 g/100 mL or less, 1.2 g/100 mL or less, 1.1 g/100 mL or less, 1.0 g/100 mL or less, less than 1.0 g/100 mL, 0.9 g/100 mL or less, 0.8 g/100 mL or less, 0.7 g/100 mL or less, 0.6 g/100 mL or less, 0.5 g/100 mL or less, less than 0.5 g/100 mL, 0.4 g/100 mL or less, 0.3 g/100 mL or less, or 0.2 g/100 mL or less.

The sugar content can be adjusted by appropriately setting the addition of diluting water or carbonated water, the types of raw materials (such as malt, corn grits, and sugar solution), the amounts of raw materials, the type of enzyme, the amount of enzyme added (also including a saccharolytic enzyme or an isomerase), the timing of enzyme addition, the saccharification time, the pH during saccharification, the pH in the preparation step (wort production step from feeding of malt until before addition of yeast), the time for wort filtration, the set temperature and holding time in each temperature region in preparation of wort (including during saccharification), the original wort extract concentration in the pre-fermentation liquid, the original wort extract concentration in the fermentation step, the fermentation conditions (such as the oxygen concentration, aeration conditions, yeast species, amount of yeast added, the number of yeast grown, removal timing of yeast, fermentation temperature, fermentation time, pressure setting, and carbon dioxide concentration), and the like.

In addition, the "sugar" in the present specification refers to a sugar based on the Nutrition Labeling Standards for Foods (Ministry of Health, Labour and Welfare Notification No. 176, 2003, Consumer Affairs Agency Notification No. 8, Partial Revision, September 27, 2013) and specifically means a material obtained by removing protein, lipid, dietary fiber, ash, alcohol content, and water from the target food. Thus, the amount of sugar in a food can be calculated by subtracting the amounts of protein, lipid, dietary fiber, ash, and water from the weight of the food.

Here, the amounts of protein, lipid, dietary fiber, ash, and water can be measured by the methods described in the Nutrition Labeling Standards. Specifically, the amount of protein can be measured by a method of quantitative conversion of nitrogen, the amount of lipid can be measured by an ether extraction method, the amount of dietary fiber can be measured by the Prosky method, the amount of ash can be measured by a direct ashing method, and the amount of water can be measured by a method of heating and drying under reduced pressure.

In the case where the processed food according to an embodiment of the present invention is a beer-taste beverage, the content of dietary fiber may be 0 g/100 mL or more, 0.1 g/100 mL or more, 0.2 g/100 mL or more, 0.3 g/100 mL or more, 0.4 g/100 mL or more, or 0.5 g/100 mL or more, and 5.0 g/100 mL or less, 4.5 g/100 mL or less, 4.0 g/100 mL or less, 3.5 g/100 mL or less, 3.0 g/100 mL or less, 2.5 g/100 mL or less, 2.0 g/100 mL or less, 1.5 g/100 L or less, or 1.0 g/100 mL or less.

"Dietary fiber" is a general term for indigestible components which are contained in foods and are not digested or hardly digested by digestive enzymes in the human stomach, intestine, or the like, and is broadly divided into water-soluble dietary fiber, which is water-soluble, and insoluble dietary fiber, which is insoluble in water.

Examples of the water-soluble dietary fiber include indigestible dextrin, polydextrose, guar gum degradation products, pectin, glucomannan, alginic acid, laminarin, fucoidan, and carrageenan. In addition, examples of the insoluble dietary fiber include cellulose, hemicellulose, lignin, chitin, and chitosan.

In the present invention, the dietary fiber may be not only a dietary fiber incorporated by addition but also a dietary fiber originating from a raw material or a dietary fiber originating from an animal or plant, and the origin is not particularly limited.

The content of dietary fiber can be adjusted by appropriately setting the addition of diluting water or carbonated water, the types of raw materials (such as malt, corn grits, and sugar solution), the amounts of raw materials, the type of enzyme, the amount of enzyme added (also including a saccharolytic enzyme or an isomerase), the timing of enzyme addition, the saccharification time, the pH during saccharification, the pH in the preparation step (wort production step from feeding of malt until before addition of yeast), the time for wort filtration, the set temperature and holding time in each temperature region in preparation of wort (including during saccharification), the original wort extract concentration in the pre-fermentation liquid, the original wort extract concentration in the fermentation step, the fermentation conditions (such as the oxygen concentration, aeration conditions, yeast species, amount of yeast added, the number of yeast grown, removal timing of yeast, fermentation temperature, fermentation time, pressure setting, and carbon dioxide concentration), and the like.

In addition, in the present specification, the content of dietary fiber can be measured by the Prosky method.

In the case where the processed food according to an embodiment of the present invention is a beer-taste beverage, the total polyphenol amount may be 0 mass ppm or more, 5 mass ppm or more, 10 mass ppm or more, 15 mass ppm or more, 20 mass ppm or more, 25 mass ppm or more, 30 mass ppm or more, 35 mass ppm or more, 40 mass ppm or more, 45 mass ppm or more, 50 mass ppm or more, 55 mass ppm or more, 60 mass ppm or more, 65 mass ppm or more, 70 mass ppm or more, 75 mass ppm or more, 80 mass ppm or more, 85 mass ppm or more, 90 mass ppm or more, 95 mass ppm or more, 100 mass ppm or more, 110 mass ppm or more, 120 mass ppm or more, 130 mass ppm or more, 140 mass ppm or more, 150 mass ppm or more, 160 mass ppm or more, or 170 mass ppm or more, and may be 300 mass ppm or less, 290 mass ppm or less, 280 mass ppm or less, 270 mass ppm or less, 260 mass ppm or less, 250 mass ppm or less, 240 mass ppm or less, 230 mass ppm or less, 220 mass ppm or less, 210 mass ppm or less, 200 mass ppm or less, 190 mass ppm or less, or 180 mass ppm or less.

The total polyphenol amount can be performed by appropriately setting the addition of diluting water or carbonated water, the types of raw materials (such as malt, corn grits, and sugar solution), the amounts of raw materials, the type of enzyme, the amount of enzyme added, the timing of enzyme addition, aeration time in a preparation tank (such as mash aeration), the pH in a preparation tank, the pH in the preparation step (wort production step from feeding of malt until before addition of yeast), the time for wort filtration, the set temperature and holding time in each temperature region in preparation of wort (including during saccharification), the original wort extract concentration in the pre-fermentation liquid, the original wort extract concentration in the fermentation step, the fermentation conditions (such as the oxygen concentration, aeration conditions, yeast species, amount of yeast added, the number of yeast grown, removal timing of yeast, fermentation temperature, fermentation time, pressure setting, and carbon dioxide concentration), and the like.

In addition, the total polyphenol amount can be adjusted by appropriately setting the usage amount of a raw material with high polyphenol content, such as barley malt or malt husks (hulls). Specifically, the total polyphenol amount can be increased by increasing the usage amount of a raw material with high polyphenol content, such as malt.

In addition, in the present specification, the total polyphenol amount can be measured, for example, by a method described in Revised BCOJ Beer Analysis Method (published by Public Interest Incorporated Foundation, The Brewing Society of Japan, edited by [Analysis Committee] Brewery Convention of Japan, Brewers Association of Japan, Enlarged and Revised Edition of 2013).

In the case where the processed food according to an embodiment of the present invention is a beer-taste beverage, the content of proline may be 0 mg/100 mL or more, 0.1 mg/100 mL or more, 0.5 mg/100 mL or more, 1.0 mg/100 mL or more, 2.0 mg/100 mL or more, 3.0 mg/100 mL or more, 4.0 mg/100 mL or more, 5.0 mg/100 mL or more, 6.0 mg/100 mL or more, 7.0 mg/100 mL or more, 8.0 mg/100 mL or more, 9.0 mg/100 mL or more, 10.0 mg/100 mL or more, 12.0 mg/100 mL or more, 15.0 mg/100 mL or more, 17.0 mg/100 mL or more, 20.0 mg/100 mL or more, 25.0 mg/100 mL or more, 30.0 mg/100 mL or more, 35.0 mg/100 mL or more, 40.0 mg/100 mL or more, 45.0 mg/100 mL or more, 50.0 mg/100 mL or more, 55.0 mg/100 mL or more, 60.0 mg/100 mL or more, 65.0 mg/100 mL or more, 70.0 mg/100 mL or more, 75.0 mg/100 mL or more, 80.0 mg/100 mL or more, 85.0 mg/100 mL or more, 90.0 mg/100 mL or more, 95.0 mg/100 mL or more, 100 mg/100 mL or more, 105 mg/100 mL or more, 110 mg/100 mL or more, 115 mg/100 mL or more, 120 mg/100 mL or more, 125 mg/100 mL or more, 130 mg/100 mL or more, 135 mg/100 mL or more, 140 mg/100 mL or more, 145 mg/100 mL or more, 150 mg/100 mL or more, 155 mg/100 mL or more, 160 mg/100 mL or more, 165 mg/100 mL or more, 170 mg/100 mL or more, 175 mg/100 mL or more, 180 mg/100 mL or more, 185 mg/100 mL or more, 190 mg/100 mL or more, 195 mg/100 mL or more, 200 mg/100 mL or more, 205 mg/100 mL or more, 210 mg/100 mL or more, 215 mg/100 mL or more, 220 mg/100 mL or more, 225 mg/100 mL or more, 230 mg/100 mL or more, 235 mg/100 mL or more, 240 mg/100 mL or more, 245 mg/100 mL or more, 250 mg/100 mL or more, 255 mg/100 mL or more, 260 mg/100 mL or more, 265 mg/100 mL or more, 270 mg/100 mL or more, 275 mg/100 mL or more, 280 mg/100 mL or more, 285 mg/100 mL or more, 290 mg/100 mL or more, or 295 mg/100 mL or more, and may be 300 mg/100 mL or less, 295 mg/100 mL or less, 290 mg/100 mL or less, 285 mg/100 mL or less, 280 mg/100 mL or less, 275 mg/100 mL or less, 270 mg/100 mL or less, 265 mg/100 mL or less, 260 mg/100 mL or less, 255 mg/100 mL or less, 250 mg/100 mL or less, 245 mg/100 mL or less, 240 mg/100 mL or less, 235 mg/100 mL or less, 230 mg/100 mL or less, 225 mg/100 mL or less, 220 mg/100 mL or less, 215 mg/100 mL or less, 210 mg/100 mL or less, 205 mg/100 mL or less, 200 mg/100 mL or less, 195 mg/100 mL or less, 190 mg/100 mL or less, 185 mg/100 mL or less, 180 mg/100 mL or less, 175 mg/100 mL or less, 170 mg/100 mL or less, 165 mg/100 mL or less, 160 mg/100 mL or less, 155 mg/100 mL or less, 150 mg/100 mL or less, 145 mg/100 mL or less, 140 mg/100 mL or less, 135 mg/100 mL or less, 130 mg/100 mL or less, 125 mg/100 mL or less, 120 mg/100 mL or less, 115 mg/100 mL or less, 110 mg/100 mL or less, 105 mg/100 mL or less, 100 mg/100 mL or less, 95 mg/100 mL or less, 90 mg/100 mL or less, 85 mg/100 mL or less, 80 mg/100 mL or less, 75 mg/100 mL or less, 70 mg/100 mL or less, 65 mg/100 mL or less, 60 mg/100 mL or less, 55 mg/100 mL or less, 50 mg/100 mL or less, 45 mg/100 mL or less, 40 mg/100 mL or less, 35 mg/100 mL or less, 30 mg/100 mL or less, 25 mg/100 mL or less, 20 mg/100 mL or less, or 15 mg/100 mL.

Proline is a type of amino acid that is contained in a relatively large amount in barley, such as malt, and whose

content does not change much before and after the fermentation step. Adjusting the content of proline allows results in a beer-taste beverage with even better taste.

In the present specification, the content of proline can be measured, for example, using an automatic amino acid analyzer L-8800A available from Hitachi, Ltd. or the like.

In the case where the processed food to be produced is a beer-taste beverage, from the viewpoint of making a beverage with excellent taste typical of a beer-taste beverage, the original wort extract concentration may be 5.0 mass% or more, 5.1 mass% or more, 5.2 mass% or more, 5.3 mass% or more, 5.4 mass% or more, 5.5 mass% or more, 5.6 mass% or more, 5.7 mass% or more, 5.8 mass% or more, 5.9 mass% or more, 6.0 mass% or more, 6.1 mass% or more, 6.2 mass% or more, 6.3 mass% or more, 6.4 mass% or more, 6.5 mass% or more, 6.6 mass% or more, 6.7 mass% or more, 6.8 mass% or more, 6.9 mass% or more, 7.0 mass% or more, 7.1 mass% or more, 7.2 mass% or more, 7.3 mass% or more, 7.4 mass% or more, 7.5 mass% or more, 7.6 mass% or more, 7.7 mass% or more, 7.8 mass% or more, 7.9 mass% or more, 8.0 mass% or more, 8.1 mass% or more, 8.2 mass% or more, 8.3 mass% or more, 8.4 mass% or more, 8.5 mass% or more, 8.6 mass% or more, 8.7 mass% or more, 8.8 mass% or more, 8.9 mass% or more, 9.0 mass% or more, 9.1 mass% or more, 9.2 mass% or more, 9.3 mass% or more, 9.4 mass% or more, 9.5 mass% or more, 9.6 mass% or more, 9.7 mass% or more, 9.8 mass% or more, 9.9 mass% or more, 10.0 mass% or more, 10.1 mass% or more, 10.2 mass% or more, 10.3 mass% or more, 10.4 mass% or more, 10.5 mass% or more, 10.6 mass% or more, 10.7 mass% or more, 10.8 mass% or more, 10.9 mass% or more, 11.0 mass% or more, 11.1 mass% or more, 11.2 mass% or more, 11.3 mass% or more, 11.4 mass% or more, 11.5 mass% or more, 11.6 mass% or more, 11.7 mass% or more, 11.8 mass% or more, 11.9 mass% or more, 12.0 mass% or more, 12.1 mass% or more, 12.2 mass% or more, 12.3 mass% or more, 12.4 mass% or more, 12.5 mass% or more, 12.6 mass% or more, 12.7 mass% or more, 12.8 mass% or more, 12.9 mass% or more, 13.0 mass% or more, 13.1 mass% or more, 13.2 mass% or more, 13.3 mass% or more, 13.4 mass% or more, 13.5 mass% or more, 13.6 mass% or more, 13.7 mass% or more, 13.8 mass% or more, 13.9 mass% or more, 14.0 mass% or more, 14.1 mass% or more, 14.2 mass% or more, 14.3 mass% or more, 14.4 mass% or more, 14.5 mass% or more, 14.6 mass% or more, 14.7 mass% or more, 14.8 mass% or more, 14.9 mass% or more, 15.0 mass% or more, 15.1 mass% or more, 15.2 mass% or more, 15.3 mass% or more, 15.4 mass% or more, 15.5 mass% or more, 15.6 mass% or more, 15.7 mass% or more, 15.8 mass% or more, 15.9 mass% or more, 16.0 mass% or more, 16.1 mass% or more, 16.2 mass% or more, 16.3 mass% or more, 16.4 mass% or more, 16.5 mass% or more, 16.6 mass% or more, 16.7 mass% or more, 16.8 mass% or more, 16.9 mass% or more, 17.0 mass% or more, 17.1 mass% or more, 17.2 mass% or more, 17.3 mass% or more, 17.4 mass% or more, 17.5 mass% or more, 17.6 mass% or more, 17.7 mass% or more, 17.8 mass% or more, 17.9 mass% or more, 18.0 mass% or more, 18.1 mass% or more, 18.2 mass% or more, 18.3 mass% or more, 18.4 mass% or more, 18.5 mass% or more, 18.6 mass% or more, 18.7 mass% or more, 18.8 mass% or more, 18.9 mass% or more, 19.0 mass% or more, 19.1 mass% or more, 19.2 mass% or more, 19.3 mass% or more, 19.4 mass% or more, 19.5 mass% or more, 19.6 mass% or more, 19.7 mass% or more, 19.8 mass% or more, or 19.9 mass% or more, and from the viewpoint of making a beverage with distinguished refreshing aroma and sweet aroma typical of a beer-taste beverage, the original wort extract concentration may be 20.0 mass% or less, 19.9 mass% or less, 19.8 mass% or less, 19.7 mass% or less, 19.6 mass% or less, 19.5 mass% or less, 19.4 mass% or less, 19.3 mass% or less, 19.2 mass% or less, 19.1 mass% or less, 19.0 mass% or less, 18.9 mass% or less, 18.8 mass% or less, 18.7 mass% or less, 18.6 mass% or less, 18.5 mass% or less, 18.4 mass% or less, 18.3 mass% or less, 18.2 mass% or less, 18.1 mass% or less, 18.0 mass% or less, 17.9 mass% or less, 17.8 mass% or less, 17.7 mass% or less, 17.6 mass% or less, 17.5 mass% or less, 17.4 mass% or less, 17.3 mass% or less, 17.2 mass% or less, 17.1 mass% or less, 17.0 mass% or less, 16.9 mass% or less, 16.8 mass% or less, 16.7 mass% or less, 16.6 mass% or less, 16.5 mass% or less, 16.4 mass% or less, 16.3 mass% or less, 16.2 mass% or less, 16.1 mass% or less, 16.0 mass% or less, 15.9 mass% or less, 15.8 mass% or less, 15.7 mass% or less, 15.6 mass% or less, 15.5 mass% or less, 15.4 mass% or less, 15.3 mass% or less, 15.2 mass% or less, 15.1 mass% or less, 15.0 mass% or less, 14.9 mass% or less, 14.8 mass% or less, 14.7 mass% or less, 14.6 mass% or less, 14.5 mass% or less, 14.4 mass% or less, 14.3 mass% or less, 14.2 mass% or less, 14.1 mass% or less, 14.0 mass% or less, 13.9 mass% or less, 13.8 mass% or less, 13.7 mass% or less, 13.6 mass% or less, 13.5 mass% or less, 13.4 mass% or less, 13.3 mass% or less, 13.2 mass% or less, 13.1 mass% or less, 13.0 mass% or less, 12.9 mass% or less, 12.8 mass% or less, 12.7 mass% or less, 12.6 mass% or less, 12.5 mass% or less, 12.4 mass% or less, 12.3 mass% or less, 12.2 mass% or less, 12.1 mass% or less, 12.0 mass% or less, 11.9 mass% or less, 11.8 mass% or less, 11.7 mass% or less, 11.6 mass% or less, 11.5 mass% or less, 11.4 mass% or less, 11.3 mass% or less, 11.2 mass% or less, 11.1 mass% or less, 11.0 mass% or less, 10.9 mass% or less, 10.8 mass% or less, 10.7 mass% or less, 10.6 mass% or less, 10.5 mass% or less, 10.4 mass% or less, 10.3 mass% or less, 10.2 mass% or less, 10.1 mass% or less, 10.0 mass% or less, 9.9 mass% or less, 9.8 mass% or less, 9.7 mass% or less, 9.6 mass% or less, 9.5 mass% or less, 9.4 mass% or less, 9.3 mass% or less, 9.2 mass% or less, 9.1 mass% or less, 9.0 mass% or less, 8.9 mass% or less, 8.8 mass% or less, 8.7 mass% or less, 8.6 mass% or less, 8.5 mass% or less, 8.4 mass% or less, 8.3 mass% or less, 8.2 mass% or less, 8.1 mass% or less, 8.0 mass% or less, 7.9 mass% or less, 7.8 mass% or less, 7.7 mass% or less, 7.6 mass% or less, 7.5 mass% or less, 7.4 mass% or less, 7.3 mass% or less, 7.2 mass% or less, 7.1 mass% or less, 7.0 mass% or less, 6.9 mass% or

less, 6.8 mass% or less, 6.7 mass% or less, 6.6 mass% or less, 6.5 mass% or less, 6.4 mass% or less, 6.3 mass% or less, 6.2 mass% or less, 6.1 mass% or less, 6.0 mass% or less, 5.9 mass% or less, 5.8 mass% or less, 5.7 mass% or less, 5.6 mass% or less, 5.5 mass% or less, 5.4 mass% or less, 5.3 mass% or less, 5.2 mass% or less, or 5.1 mass% or less.

The "original wort extract concentration" in the present specification can be measured by the method described in "BCOJ Beer Analysis Method" (published by The Brewing Society of Japan, edited by Brewers Association of Japan, revised edition of November 1, 2004).

In the case where the processed food to be produced is a beer-taste beverage, the product of the malt ratio (unit: mass%) and the original wort extract concentration (unit: mass%) [malt ratio x original wort extract concentration] of the beverage may be 100 or more, 120 or more, 150 or more, 170 or more, 200 or more, 220 or more, 250 or more, 270 or more, 300 or more, 350 or more, 400 or more, 450 or more, 500 or more, 550 or more, 600 or more, 650 or more, 700 or more, 750 or more, 800 or more, 850 or more, 900 or more, 950 or more, 1000 or more, 1100 or more, 1200 or more, 1300 or more, 1400 or more, 1500 or more, 1600 or more, or 1700 or more, and may be 10000 or less, 9500 or less, 9000 or less, 8500 or less, 8000 or less, 7500 or less, 7000 or less, 6500 or less, 6000 or less, 5500 or less, 5000 or less, 4500 or less, 4000 or less, 3500 or less, 3000 or less, 2500 or less, or 2000 or less.

In the case where the processed food to be produced is a beer-taste beverage, from the viewpoint of making a beverage typical of a beer-taste beverage, the bitterness value of the beverage is preferably less than 60 BUs, more preferably 55 BUs or less, even more preferably 50 BUs or less, still more preferably 45 BUs or less, and particularly preferably 40 BUs or less, or may be 35 BUs or less, 30 BUs or less, or 25 BUs or less.

In the case where the processed food to be produced is a beer-taste beverage made using hops as a raw material, the bitterness value of the beverage may be 5 BUs or more, 7 BUs or more, 10 BUs or more, 12 BUs or more, 15 BUs or more, or 17 BUs or more.

In addition, in the case where the processed food to be produced is a beer-taste beverage made without using hops as a raw material, the bitterness value of the beverage may be less than 5.0 BUs, 3.0 BUs or less, 2.0 BUs or less, 1.0 BUs or less, 0.5 BUs or less, or 0.3 BUs or less.

The bitterness value of the beverage is an index of bitterness imparted by hop-derived components containing isohumulone as a main component and can be controlled by appropriately adjusting the usage amount of hops or a hop-derived component, such as a hop extract.

In addition, in the present specification, the "bitterness value" of the beverage can be measured by the measurement method described in "8.15 Bitterness Value" in Revised BCOJ Beer Analysis Method (published by Public Interest Incorporated Foundation, The Brewing Society of Japan, edited by [Analysis Committee] Brewery Convention of Japan, Brewers Association of Japan, Enlarged and Revised Edition of 2013).

In the case where the processed food to be produced is a beer-taste beverage, the total content of ester components including ethyl butyrate, ethyl caproate, ethyl octanoate, and ethyl decanoate in terms of an original wort extract concentration of 14.5 mass% in the beverage is, based on the total amount (100 mass%) of the beer-taste beverage, preferably 500 mass ppb or more, more preferably 520 mass ppb or more, even more preferably 550 mass ppb or more, still more preferably 570 mass ppb or more, yet more preferably 600 mass ppb or more, still even more preferably more preferably 620 mass ppb or more, and particularly preferably 650 mass ppb or more, and may be 10000 mass ppb or less, 8000 mass ppb or less, 6000 mass ppb or less, 5000 mass ppb or less, 4000 mass ppb or less, 3000 mass ppb or less, 2000 mass ppb or less, or 1000 mass ppb or less.

In the case where the processed food to be produced is a beer-taste beverage, the content of phenethyl alcohol in terms of an original wort extract concentration of 14.5 mass% in the beverage is, based on the total amount (100 mass%) of the beer-taste beverage, preferably 18.0 mass ppm or more, more preferably 20.0 mass ppm or more, even more preferably 22.0 mass ppm or more, still more preferably 24.0 mass ppm or more, yet more preferably 25.0 mass ppm or more, still even more preferably more preferably 26.0 mass ppm or more, particularly preferably 27.0 mass ppm or more, and may be 300 mass ppm or less, 200 mass ppm or less, 150 mass ppm or less, 100 mass ppm or less, 90 mass ppm or less, 80 mass ppm or less, 70 mass ppm or less, 60 mass ppm or less, or 50 mass ppm or less.

In the present specification, the total content of the ester components and the content of phenethyl alcohol can be measured by a gas chromatography-mass spectrometry (GC-MS) method.

In the case where the processed food to be produced is a beer-taste beverage, the beer-taste beverage may further contain spirits originating from grain as an alcohol component to adjust the alcoholic strength.

Here, the "spirits" means an alcoholic beverage produced by saccharifying grain, such as wheat, barley, rice, buckwheat, or corn, as a raw material using malt or, as necessary, an enzymatic agent, fermenting the saccharified product using yeast, and then distilling the fermented product.

Among these, from the viewpoint of making a beverage with good taste, the beer-taste beverage to be produced preferably contains spirits made from a plant belonging to the family *Gramineae* as a raw material, preferably contains spirits of barley or the like, and more preferably contains barley spirits or wheat spirits.

The color of the beer-taste beverage to be produced is not particularly limited; the color may be amber or gold

like ordinary beer, black like black beer, or colorless and transparent, or may be colored as desired by adding a colorant or the like. The color of the beer-taste beverage can be determined by the naked eye and may be specified by the total light transmittance, chromaticity, or the like.

In the case where the processed food according to an embodiment of the present invention is a beer-taste beverage, from the viewpoint of making a beverage with excellent taste typical of a beer-taste beverage, the chromaticity of the beer-taste beverage is preferably 7.0 EBC or more, more preferably 7.2 EBC or more, even more preferably 7.5 EBC or more, still more preferably 8.0 EBC or more, yet more preferably 8.5 EBC or more, particularly preferably 9.0 EBC or more, and further may be 9.5 EBC or more, 10.0 EBC or more, 10.5 EBC or more, 11.0 EBC or more, 11.5 EBC or more, 12.0 EBC or more, 12.5 EBC or more, or 13.0 EBC or more, and may be 200 EBC or less, 180 EBC or less, 160 EBC or less, 140 EBC or less, 120 EBC or less, 100 EBC or less, 80 EBC or less, 70 EBC or less, 60 EBC or less, 50 EBC or less, 40 EBC or less, 35 EBC or less, 30 EBC or less, 27 EBC or less, 25 EBC or less, 23 EBC or less, 20 EBC or less, 18 EBC or less, 16 EBC or less, or 15 EBC or less.

In the present specification, the "chromaticity" of the beer-taste beverage can be measured by the measurement method described in "8.8 Chromaticity" in Revised BCOJ Beer Analysis Method (published by Public Interest Incorporated Foundation, The Brewing Society of Japan, edited by [Analysis Committee] Brewery Convention of Japan, Brewers Association of Japan, Enlarged and Revised Edition of 2013). The "chromaticity" of the beer-taste beverage is specified by the unit of chromaticity (EBC unit) defined by the European Brewery Convention. A beverage with a smaller numerical value has a lighter and brighter color, whereas a beverage with a larger numerical value has a deeper and darker color.

In addition, the chromaticity of the beer-taste beverage according to an embodiment of the present invention can be controlled, for example, by appropriately adjusting the type of malt used, the blending ratio in the case of using two or more types of malts in combination, or the boiling conditions for preparation of the pre-fermentation liquid. More specifically, for example, to increase the chromaticity of the beer-taste beverage, the chromaticity can be adjusted by increasing the blending ratio of dark malt as the malt, increasing the temperature during boiling treatment, increasing boiling time, performing decoction during preparation of a saccharified liquid. Furthermore, increasing the original wort extract concentration or increasing the malt ratio can also adjust the chromaticity to a higher level.

The pH of the beer-taste beverage to be produced is not particularly limited, but from the viewpoint of suppressing the occurrence of microorganisms, the pH may be 5.0 or lower, 4.9 or lower, 4.8 or lower, 4.7 or lower, 4.6 or lower, 4.55 or lower, or 4.5 or lower, and from the viewpoint of improving the flavor of the beverage, the pH may be 2.0 or higher, 2.1 or higher, 2.2 or higher, 2.3 or higher, 2.4 or higher, 2.5 or higher, 2.6 or higher, 2.7 or higher, 2.8 or higher, 2.9 or higher, 3.0 or higher, 3.1 or higher, 3.2 or higher, 3.3 or higher, 3.4 or higher, 3.5 or higher, 3.6 or higher, 3.7 or higher, 3.8 or higher, 3.9 or higher, 4.0 or higher, 4.1 or higher, or 4.2 or higher.

3 Raw material for beverage

In an embodiment of the present invention, in the case where the processed food to be produced is a beverage, raw materials commonly used in various beverages can be used. For example, in the case where the beverage to be produced is a beer-taste beverage, water and malt are used as main raw materials for the beer-taste beverage. Furthermore, the beer-taste beverage may be a beverage made using hops as a raw material or may be a beverage made without using hops.

In addition, in an embodiment of the present invention, in the case where the processed food to be produced is a beverage, a preservative, a sweetener, a water-soluble dietary fiber, a bittering agent or a bitterness-imparting agent, an antioxidant, a flavoring, an acidulant, a salt, or the like may be used according to the type of each beverage.

Furthermore, as described above, the method of producing a processed food according to an embodiment of the present invention can produce a processed food with a lowered content of purines even using a purine-rich raw material. Thus, from the viewpoint of imparting a peculiar flavor to the processed food, a purine-rich raw material is preferably used.

The purine-rich raw material is as described above and is preferably malt in the case where the processed food to be produced is a beer-taste beverage.

3.1.1 Malt and grain other than malt

In the case where the processed food to be produced is a beer-taste beverage, the malt used as a raw material refers to malt obtained by germinating seeds of barley or the like, such as barley, wheat, rye, wild oats, oats, or adlay, drying the germinated seeds, and removing roots, and may be from any production area and of any variety.

The malt used in an embodiment of the present invention is preferably barley malt. Barley malt is one of the malts most commonly used as a raw material for Japanese beer-taste beverages. There are several types of barley, such as two-rowed barley and six-rowed barley, and any of them may be used. Furthermore, in addition to ordinary malt, colored malt or the like can also be used. When colored malt is used, different types of colored malts may be appropriately

used in combination, or one colored malt may be used.

In addition, a grain other than malt may be used together with malt.

Examples of such a grain include barley and the like that do not fall under malt (such as barley, wheat, rye, wild oats, oats, and adlay), rice (such as white rice and brown rice), corn, kaoliang, potato, legumes (such as soybeans and peas), buckwheat, sorghum, foxtail millet, Japanese millet, starch resulting therefrom, and extracts thereof.

In the case without using malt, a liquid sugar containing a carbon source can be used, and as a nitrogen source, a yeast extract, a protein derived from an animal or plant, or an amino acid-containing raw material (e.g., such as soy protein) other than malt, such as the grain described above, can be used.

3.1.2 Hops

In the case where the processed food to be produced is a beer-taste beverage made using hops, examples of the form of the hops include pellet hops, powdered hops, and hop extract. In addition, the hops used may be a processed hop product, such as isomerized hops or reduced hops.

In the case where the processed food to be produced is a beer-taste beverage made using hops, the amount of hops added is appropriately adjusted and is preferably from 0.0001 to 1 mass% based on the total amount (100 mass%) of the raw materials of the beverage.

In addition, a beer-taste beverage made using hops as a raw material is a beverage containing iso-$\alpha$-acid, which is a component derived from hops. The content of iso-$\alpha$-acid in the beer-taste beverage made using hops may be more than 0.1 mass ppm or more than 1.0 mass ppm based on the total amount (100 mass%) of the beer-taste beverage.

On the other hand, the content of iso-$\alpha$-acid in a beer-taste beverage made without using hops may be 0.1 mass ppm or less based on the total amount (100 mass%) of the beer-taste beverage.

In the present specification, the content of iso-$\alpha$-acid means a value measured by the high-performance liquid chromatography (HPLC) analysis method described in Revised BCOJ Beer Analysis Method (published by Public Interest Incorporated Foundation, The Brewing Society of Japan, edited by [Analysis Committee] Brewery Convention of Japan, Brewers Association of Japan, Enlarged and Revised Edition of 2013).

3.1.3 Preservative

In an embodiment of the present invention, in the case where the processed food to be produced is a beverage, it may be a beverage further containing a preservative.

Examples of the preservative used in an embodiment of the present invention include benzoic acid; benzoate salts, such as sodium benzoate; benzoate esters, such as propyl parahydroxybenzoate and butyl parahydroxybenzoate; and dimethyl dicarbonate. In addition, for the preservative, a commercially available preparation, such as Kyohryoku Sanpurezah (Powerful Sanplezer) (a mixture of sodium benzoate and butyl benzoate, available from San-Ei Gen F.F.I., Inc.) may be used.

One of these preservatives may be used alone, or two or more of these preservatives may be used in combination.

In the case where the processed food to be produced is a beverage containing a preservative, the content of the preservative is adjusted preferably to 5 to 1200 mass ppm, more preferably to 10 to 1100 mass ppm, even more preferably to 15 to 1000 mass ppm, and even more preferably to 20 to 900 mass ppm based on the total amount (100 mass%) of the beverage.

3.1.4 Sweetener

In an embodiment of the present invention, in the case where the processed food to be produced is a beverage, it may be a beverage further containing a sweetener.

Examples of the sweetener used in an embodiment of the present invention include saccharides obtained by degrading starch derived from grain with an acid, an enzyme, or the like, such as commercially available saccharified liquids and commercially available starch syrup; tri- or higher saccharides; sugar alcohols; natural sweeteners, such as stevia; and artificial sweeteners.

One of these sweeteners may be used alone, or two or more of these sweeteners may be used in combination.

These saccharides may be in the form of a liquid, such as a solution, or a solid, such as a powder.

In addition, there are no particular limitations on the type of raw material grain for starch, the method of purifying starch, and the conditions for treatment, such as hydrolysis with an enzyme or an acid. For example, a saccharide with increased ratio of maltose obtained by appropriately setting conditions for hydrolysis with an enzyme or an acid may be used. In addition, sucrose, fructose, glucose, maltose, trehalose, maltotriose, and a solution thereof (sugar solution) can

also be used.

In addition, examples of the artificial sweetener include aspartame, acesulfame potassium (acesulfame K), sucralose, and neotame.

Examples of the water-soluble dietary fiber include indigestible dextrin, polydextrose, guar gum degradation products, pectin, glucomannan, alginic acid, laminarin, fucoidan, and carrageenan. From the viewpoint of versatility, such as stability and safety, indigestible dextrin or polydextrose is preferred.

In the case where the processed food to be produced is a beverage, it may be a beverage with a limited content of a high-intensity sweetener.

The content of the high-intensity sweetener contained in the beverage with a limited content of the high-intensity sweetener may be less than 10.0 parts by mass, less than 5.0 parts by mass, less than 2.0 parts by mass, less than 1.0 parts by mass, less than 0.1 parts by mass, less than 0.05 parts by mass, less than 0.01 parts by mass, less than 0.001 parts by mass, or less than 0.0001 parts by mass relative to 100 parts by mass of the total amount of uric acid contained in the beverage.

In addition, the content of the high-intensity sweetener contained in the beverage with a limited content of the high-intensity sweetener may be less than 1000 mass ppm, less than 100 mass ppm, less than 75 mass ppm, less than 50 mass ppm, less than 40 mass ppm, less than 30 mass ppm, less than 25 mass ppm, less than 20 mass ppm, less than 15 mass ppm, less than 10 mass ppm, less than 1 mass ppm, less than 100 mass ppb, less than 10 mass ppb, less than 1 mass ppb, less than 100 mass ppt, less than 10 mass ppt, or less than 1 mass ppt based on the total amount (100 mass%) of the beverage.

Examples of the high-intensity sweetener include both natural high-intensity sweeteners and artificial high-intensity sweeteners, for example, rebaudioside A, rebaudioside B, rebaudioside C, rebaudioside D, rebaudioside E, rebaudioside F, dulcoside A, dulcoside B, rubusoside, stevia, stevioside, mogroside IV, mogroside V, monk fruit (*Siraitia grosvenorii*) sweetener, siamenoside, monatin and its salts (monatin SS, monatin RR, monatin RS, monatin SR), curculin, glycyrrhizinic acid and its salts, thaumatin, monellin, mabinlin, brazzein, hernandulcin, phyllodulcin, glycyphyllin, phlorizin, trilobatin, baiyunoside, osladin, erythritol, polypodoside A, pterocaryoside A, pterocaryoside B, mucrodioside, phlomisoside I, periandrin I, abrusoside A, and cyclocarioside I.

In the case where the processed food to be produced is a beverage, it may be a beverage with a limited content of rebaudioside A.

The content of rebaudioside A contained in the beverage with a limited content of rebaudioside A may be less than 10.0 parts by mass, less than 5.0 parts by mass, less than 2.0 parts by mass, less than 1.0 parts by mass, less than 0.1 parts by mass, less than 0.05 parts by mass, less than 0.01 parts by mass, less than 0.001 parts by mass, or less than 0.0001 parts by mass relative to 100 parts by mass of the total amount of uric acid contained in the beverage.

In addition, the content of rebaudioside A contained in the beverage with a limited content of rebaudioside A may be less than 1000 mass ppm, less than 100 mass ppm, less than 10 mass ppm, less than 1 mass ppm, less than 100 mass ppb, less than 10 mass ppb, less than 1 mass ppb, less than 100 mass ppt, less than 10 mass ppt, or less than 1 mass ppt based on the total amount (100 mass%) of the beverage.

In the case where the processed food to be produced is a beverage, it may be a beverage with a limited content of erythritol.

The content of erythritol contained in the beverage with a limited content of erythritol may be less than 10.0 parts by mass, less than 5.0 parts by mass, less than 2.0 parts by mass, less than 1.0 parts by mass, less than 0.1 parts by mass, less than 0.05 parts by mass, less than 0.01 parts by mass, less than 0.001 parts by mass, or less than 0.0001 parts by mass relative to 100 parts by mass of the total amount of uric acid contained in the beverage.

In addition, the content of erythritol contained in the beverage with a limited content of erythritol may be less than 1000 mass ppm, less than 100 mass ppm, less than 10 mass ppm, less than 1 mass ppm, less than 100 mass ppb, less than 10 mass ppb, less than 1 mass ppb, less than 100 mass ppt, less than 10 mass ppt, or less than 1 mass ppt based on the total amount (100 mass%) of the beverage.

3.1.5 Bittering agent and bitterness-imparting agent

In an embodiment of the present invention, in the case where the processed food to be produced is a beverage, it may be a beverage further containing one or more selected from a bittering agent and a bitterness-imparting agent.

In particular, in the case where the processed food to be produced is a beer-taste beverage, bitterness may be imparted by hops, or a bittering agent or bitterness-imparting agent described below may be used together with hops. In addition, a bittering agent or bitterness-imparting agent described below may be used instead of hops without using hops.

The bittering agent or bitterness-imparting agent is not particularly limited, and a substance used as a bitterness-imparting agent in ordinary beer and low-malt beer can be used. Examples include rosemary, litchi, caraway, juniper berry, sage, reishi mushroom, bay laurel, quassin, caffeine, absinthin, naringin, citrus extract, bitter wood extract, coffee

extract, tea extract, bitter gourd extract, lotus embryo extract, *Aloe arborescens* extract, rosemary extract, litchi extract, laurel extract, sage extract, and caraway extract.

One of these bittering agents and bitterness-imparting agents may be used alone, or two or more of these may be used in combination.

3.1.6 Antioxidant

In an embodiment of the present invention, in the case where the processed food to be produced is a beverage, it may be a beverage further containing an antioxidant.

The antioxidant is not particularly limited, and a substance used as an antioxidant in ordinary beer and low-malt beer can be used, and examples include ascorbic acid, erythorbic acid, and catechin.

One of these antioxidants may be used alone, or two or more of these antioxidants may be used in combination.

3.1.7 Flavoring

In an embodiment of the present invention, in the case where the processed food to be produced is a beverage, it may be a beverage further containing a flavoring.

The flavoring is not particularly limited and can be appropriately selected according to each beverage.

For example, in the case where the processed food to be produced is a beer-taste beverage, examples of the beer flavorings include esters and higher alcohols, and specific examples include n-propanol and isobutanol. One of these flavorings may be used alone, or two or more of these flavorings may be used in combination.

3.1.8 Acidulant

In an embodiment of the present invention, in the case where the processed food to be produced is a beverage, it may be a beverage further containing an acidulant.

The acidulant is not particularly limited as long as it is a substance with a sour taste, and examples include tartaric acid, phosphoric acid, citric acid, gluconic acid, lactic acid, malic acid, phytic acid, acetic acid, succinic acid, glucono-delta-lactone, and salts thereof.

Among these, the acidulant is preferably at least one selected from tartaric acid, phosphoric acid, citric acid, gluconic acid, lactic acid, malic acid, phytic acid, acetic acid, succinic acid, and salts thereof, more preferably at least one selected from tartaric acid, phosphoric acid, citric acid, lactic acid, tartaric acid, acetic acid, and salts thereof, and even more preferably at least one selected from tartaric acid, phosphoric acid, and lactic acid.

One of these acidulants may be used alone, or two or more of these acidulants may be used in combination.

3.1.9 Salt

In an embodiment of the present invention, in the case where the processed food to be produced is a beverage, it may be a beverage further containing a salt.

Examples of the salt include sodium chloride, acid potassium phosphate, acid calcium phosphate, ammonium phosphate, magnesium sulfate, calcium sulfate, potassium metabisulfite, calcium chloride, magnesium chloride, potassium nitrate, and ammonium sulfate.

One of these salts may be used alone, or two or more of these salts may be used in combination.

3.2 Carbonic acid gas

In an embodiment of the present invention, in the case where the processed food to be produced is a carbonated beverage, the processed food contains carbonic acid gas.

The amount of carbonic acid gas in the carbonated beverage may be adjusted using carbonation equipment or may be adjusted by adding carbonated water. In the case where the processed food to be produced is a beer-taste beverage, carbonic acid gas produced in the fermentation step of the beer-taste beverage can be used as it is as carbonic acid gas contained in the beer-taste beverage.

The carbonic acid gas concentration in the case where the processed food to be produced is a carbonated beverage is preferably 0.30 (w/w)% or more, more preferably 0.35 (w/w)% or more, even more preferably 0.40 (w/w)% or more, still more preferably 0.42 (w/w)% or more, and particularly preferably 0.45 (w/w)% or more, and preferably 0.80 (w/w)% or less, more preferably 0.70 (w/w)% or less, even more preferably 0.60 (w/w)% or less, still more preferably 0.57 (w/w)% or less, and particularly preferably 0.55 (w/w)% or less.

In the present specification, the carbonic acid gas concentration can be measured by immersing a container

containing a target carbonated beverage in a water bath at 20°C for 30 minutes or more with occasional shaking of the container to adjust the beverage to 20°C and then using a gas volume measuring device (e.g., such as GVA-500 (available from Kyoto Electronics Manufacturing Co., Ltd.)).

In an embodiment of the present invention, in the case where the processed food to be produced is a packaged beverage, the carbonic acid gas pressure of the packaged beverage is appropriately adjusted such that the carbonic acid gas concentration is in the range described above and may be 5.0 kg/cm$^2$ or less, 4.5 kg/cm$^2$ or less, or 4.0 kg/cm$^2$ or less, and 0.20 kg/cm$^2$ or more, 0.50 kg/cm$^2$ or more, or 1.0 kg/cm$^2$ or more. Any of these upper and lower limits may be combined; for example, the carbonic acid gas pressure of the beverage may be 0.20 kg/cm$^2$ or more and 5.0 kg/cm$^2$ or less, 0.50 kg/cm$^2$ or more and 4.5 kg/cm$^2$ or less, or 1.0 kg/cm$^2$ or more and 4.0 kg/cm$^2$ or less.

In the present specification, the gas pressure refers to the gas pressure in the container except in special cases.

The pressure can be measured by a method well-known to those skilled in the art, for example, using a method in which a sample adjusted to 20°C is fixed to a gas internal pressure meter, the stopcock of the gas internal pressure meter is opened once to release the gas, the stopcock is closed again, the gas internal pressure meter is shaken, and a value when the pointer reaches a certain position is read; or using a commercially available gas pressure measuring device.

3.3 Additional additive

To the processed food to be produced, various types of additives may be added as raw materials as necessary to the extent that the effects of the present invention are not hindered.

Examples of such an additive include colorants; foam-forming agents; fermentation promoters; yeast extract; protein-based substances, such as peptide-containing substances; and seasonings, such as amino acids.

The colorant is used to impart a desired color to the processed food, and a caramel dye, a cacao dye, a safflower dye, a colored sugar solution, and/or the like can be used.

In the case where the processed food to be produced is a beer-taste beverage, the foamforming agent is used to form beer-like foam or to keep the foam of the beverage, and a plantextracted saponin-based substance, such as soybean saponin and/or quillaja saponin; a plant protein, such as corn and/or soybean; and a peptide-containing substance, such as a collagen peptide; a yeast extract; and/or the like can be appropriately used.

The fermentation promoter is used to promote fermentation by yeast in the case where the processed food to be produced is a beer-taste beverage. For example, a yeast extract; a bran component, such as rice or wheat bran; a vitamin; a mineral agent; and/or the like can be used alone or in combination.

3.4 Packaged processed food

In an embodiment of the present invention, the processed food to be produced may be a packaged processed food packaged in a container. For the packaged processed food, a container of any form and material may be used; examples of the container include a bottle, a can, a bottle can, a barrel, a PET bottle, a paper pack, a pouch, a bag-in-box, a paper bag, a resin bag, a portion pack, and a chilled cup, and the container is appropriately selected according to the type of processed food.

4.1 Method of producing fermented beer-taste beverage

Hereinafter, as a method of producing a processed food according to an embodiment of the present invention, a method of producing a processed food will be described in detail by taking a fermented beer-taste beverage as an example.

Examples of the method of producing a fermented beer-taste beverage include a method including (1) to (3) below, where step (a) above is performed at least before step (1), simultaneously with one or more steps of steps (1) to (3), between two steps selected from steps (1) to (3), or after step (3):

(1) performing at least one treatment of saccharification treatment, boiling treatment, or solid content removal treatment on a raw material to produce a pre-fermentation liquid;
(2) cooling the pre-fermentation liquid produced in step (1) to produce a cooled pre-fermentation liquid; and
(3) adding yeast to the cooled pre-fermentation liquid produced in step (2) to perform alcoholic fermentation.

In the method of producing a fermented beer-taste beverage, step (a) above can be performed at one or more timings of (i) to (v) below:

- (i): before step (1);

- (ii): simultaneously with at least one of step (1), step (2), or step (3);
- (iii): between step (1) and step (2);
- (iv): between step (2) and step (3); and
- (v): after step (3).

In addition, the method may include: (a1) adding a food composition having uricase activity, simultaneously with step (a) above and/or after step (a) above. In the case where a food composition having both xanthine oxidase activity and uricase activity is added in step (a), step (a1) is also performed simultaneously and thus the need for performing step (a1) separately is eliminated.
In addition, the method of producing a fermented beer-taste beverage may include the above-mentioned step (b) of performing treatment of removing purines.
Furthermore, the method of producing a fermented beer-taste beverage may include inactivating the xanthine oxidase activity, for example, performing heating and/or pH adjustment. The present invention also includes a fermented beer-taste beverage in which xanthine oxidase activity is inactivated by heating, pH adjustment, and/or the like, as long as the fermented beer-taste beverage has undergone step (a) of adding a food composition having xanthine oxidase activity.
Step (b) can be performed before step (a), simultaneously with step (a), and after step (a), but from the viewpoint of effectively lowering the purine content, step (b) is preferably performed before step (a) and/or simultaneously with step (a), and is more preferably performed at least before step (a).
Moreover, step (b) may be performed simultaneously with step (1) or after completion of step (1), or simultaneously with step (3) or after completion of step (3).
In the case of producing a beverage with a bitterness value of 5 BUs or more as a raw material in the method of producing a fermented beer-taste beverage, the method preferably includes adding hops. In addition, in the case of producing a beverage with a bitterness value of less than 5 BUs as a raw material, the method preferably does not include adding hops.

Step (1)

Step (1) is a step of performing at least one treatment among saccharification treatment, boiling treatment, or solid content removal treatment using various raw materials to obtain a pre-fermentation liquid.
For example, in the case of using malt as a raw material, various raw materials including water and malt are fed in a preparation kettle or a preparation tank, and an enzymatic agent that promotes a change of a component derived from the raw material may be added as necessary before fermentation.
Examples of the enzymatic agent include amylase, protease, purine nucleosidase, adenine deaminase, guanine deaminase, deaminase, polyphenol oxidase, glucanase, xylanase, pectinase, cellulase, lipase, and glucosidase. In addition, examples include enzymatic agents falling under "(3) Following Enzymatic Agents Added during Brewing Step for Purpose of Rationalization of Brewing and the like" in Article 3 "7.Articles not Handled as Raw Materials for Alcoholic Beverages" of the Notice on the Liquor Tax Law and the Administrative Ordinance Related to Alcoholic Beverages (revised on June 27, 2018).
Adding these enzymatic agents can efficiently adjust the component composition of the resulting fermented beer-taste beverage. As various raw materials besides malt, hops, a preservative, a sweetener, a water-soluble dietary fiber, a bittering agent or bitterness-imparting agent, an antioxidant, a flavoring, an acidulant, a salt, and/or the like may be added. These raw materials may be added before performing the saccharification treatment, during the saccharification treatment, or after completion of the saccharification treatment. In addition, these raw materials may be added after the alcoholic fermentation in the next step.
A mixture of the various raw materials is heated to saccharify the starch of the raw materials to perform saccharification treatment.
The temperature and time of the saccharification treatment are preferably appropriately adjusted in view of the type of malt used, the malt ratio, raw materials besides water and malt, the type and amount of the enzyme used, the original wort extract concentration of the beverage finally obtained, and the like. For example, in an embodiment of the present invention, the temperature of the saccharification treatment is preferably from 35 to 60°C, and the time of the saccharification treatment is preferably from 10 to 360 minutes. After the saccharification treatment, filtration is performed, and a saccharified liquid is obtained.
The saccharified liquid is preferably subjected to boiling treatment.
When this boiling treatment is performed, hops, a bittering agent, and the like are preferably added in the case of using them as raw materials. Hops, a bittering agent, and/or the like may be added between the start of boiling the saccharified liquid and before the completion of the boiling.
Instead of the saccharified liquid, a pre-fermentation liquid may be prepared by adding hops, a bittering agent,

and/or the like to a mixture obtained by adding warm water to a malt extract, and boiling the mixture.

In addition, in the case without using malt, a pre-fermentation liquid may be prepared by mixing, as the raw materials, a liquid sugar containing a carbon source; a nitrogen source as an amino acid-containing raw material other than barley and the like or malt; hops; a preservative; a sweetener; a water-soluble dietary fiber; a bittering agent or a bitterness-imparting agent; an antioxidant; a flavoring; an acidulant; a salt; and/or the like together with warm water to prepare a liquid sugar solution, and boiling the liquid sugar solution.

In the case of using hops, it may be added before the boiling treatment or may be added between the start of boiling the liquid sugar solution and before the completion of the boiling.

Step (2)

Step (2) is a step of cooling the pre-fermentation liquid produced in step (1) to obtain a cooled pre-fermentation liquid.

After the completion of the boiling treatment, the pre-fermentation liquid is transferred to a whirlpool and cooled to 0 to 20°C. After the cooling, solid contents, such as coagulated protein, may be removed to adjust the original wort extract concentration.

Through such treatment, a cooled pre-fermentation liquid is obtained.

Step (3)

Step (3) is a step of adding yeast to the cooled pre-fermentation liquid produced in step (2) to perform alcoholic fermentation.

The yeast used in this step can be appropriately selected in view of the type of the fermented beverage produced, the target flavor, the fermenting conditions, and the like, and topfermenting yeast may be used, or bottom-fermenting yeast may be used. In addition, wine yeast, yeast for brewing Japanese sake (sake yeast), wild yeast capable of producing alcohol, or the like may be used.

The yeast in the form of a yeast suspension as is may be added to raw materials, or a slurry produced by concentrating the yeast by centrifugation or sedimentation may be added to the pre-fermentation liquid. Alternatively, a material obtained by completely removing the supernatant after the centrifugation may be added. The amount of yeast added to a stock solution can be appropriately set and is, for example, appropriately from $5 \times 10^6$ cells/mL to $1 \times 10^8$ cells/mL.

Various conditions, such as the fermentation temperature and the fermentation period, for performing alcoholic fermentation can be appropriately set, and fermentation may be performed, for example, under conditions of 8 to 25°C for 5 to 10 days. During the fermentation step, the temperature (temperature increase or temperature decrease) or pressure of the fermented liquid may be changed.

In addition, after completion of this step, the yeast may be removed with a filter or the like, and water or an additive, such as a flavoring, an acidulant, or a dye, may be added as necessary.

After these steps, a step performed in the production of a beer-taste beverage known to those skilled in the art, such as a step of storing an alcoholic beverage and a filtration step, may be performed.

The fermented beer-taste beverage thus produced is filled in a predetermined container and distributed to the market as a product.

The method of packaging the fermented beer-taste beverage is not particularly limited, and a packaging method known to those skilled in the art can be used. Through the packaging, the fermented beer-taste beverage is filled and sealed in a container. In the packaging, a container of any form and material may be used, and examples of the container are as described above.

4.2 Method of producing non-fermented beer-taste beverage

Next, as a method of producing a processed food according to an embodiment of the present invention, a method of producing a beverage will be described in detail by taking a non-fermented beer-taste beverage as an example.

Examples of the method of producing a non-fermented beer-taste beverage include a method including (1), (2), and (4) below, where step (a) above is performed at least before step (1), simultaneously with one or more steps of step (1), step (2), and step (4), between two steps selected from step (1), step (2), and step (4), or after step (4):

(1) performing at least one treatment of saccharification treatment, boiling treatment, or solid content removal treatment on a raw material to obtain a pre-beverage liquid;
(2) cooling the pre-beverage liquid produced in step (1) to obtain a cooled pre-beverage liquid; and
(4) adding carbonic acid gas to the cooled pre-beverage liquid produced in step (2).

Steps (1) and (2) are the same as the methods of preparing the "pre-fermentation liquid" and the "cooled pre-fermentation liquid" in the "method of producing a fermented beer-taste beverage" described above.
In the case of producing a non-fermented non-alcoholic beer-taste beverage, step (4) may be performed as it is.
In the case of producing a non-fermented alcohol-containing beer-taste beverage, the pre-beverage liquid produced in step (1) and/or the cooled pre-beverage liquid produced in step (2) may be further blended with a distilled liquor, such as spirits, whiskey, or shochu, to prepare an alcohol-containing beverage.
In addition, for a method of adding carbonic acid gas in step (4), carbonic acid gas may be added by mixing the cooled pre-beverage liquid produced in step (2) and carbonated water, or carbonic acid gas may be directly added to a cooled beverage stock solution.
When carbonic acid gas is added, an additive, such as a preservative, a sweetener, a flavoring, an acidulant, and/or a dye may be added as necessary.
In the method of producing a non-fermented beer-taste beverage, step (a) above can be performed at one or more timings of (i) to (v) below:

- (i): before step (1);
- (ii): simultaneously with at least one of step (1), step (2), or step (4);
- (iii): between step (1) and step (2);
- (iv): between step (2) and step (4); and
- (v): after step (4).

In the case of producing a non-fermented alcohol-containing beer-taste beverage, step (a) may be performed simultaneously with blending with a distilled liquor, such as spirits, whiskey, or shochu.
In addition, the method may include: (a1) adding a food composition having uricase activity, simultaneously with step (a) above and/or after step (a) above.
In addition, the method of producing a non-fermented beer-taste beverage may further include: (b) of performing treatment of removing purines from the viewpoint of making a beverage with further lowered content of purines.
Step (b) can be performed before step (a), simultaneously with step (a), and after step (a), but from the viewpoint of effectively lowering the purine content, step (b) is preferably performed before step (a) and/or simultaneously with step (a), and is more preferably performed at least before step (a).
Furthermore, step (b) may be performed simultaneously with step (1) or after completion of step (1), or simultaneously with step (4) or after completion of step (4).
In the case of producing a beverage with a bitterness value of 5 BUs or more as a raw material in the method of producing a non-fermented beer-taste beverage, the method preferably includes a step of adding hops. In addition, in the case of producing a beverage with a bitterness value of less than 5 BUs as a raw material, the method preferably does not include adding hops. The step of adding hops is preferably performed simultaneously with step (1).
The non-fermented beer-taste beverage thus produced is filled in a predetermined container and distributed to the market as a product.
The method of packaging the non-fermented beer-taste beverage is not particularly limited, and a packaging method known to those skilled in the art can be used. Through the packaging, the non-fermented beer-taste beverage is filled and sealed in a container. In the packaging, a container of any form and material may be used, and examples of the container are as described above.

5. Method of lowering purine content in processed food

A method of lowering a purine content according to an embodiment of the present invention is a method of lowering the content of purines by adding a food composition having xanthine oxidase activity to convert xanthine into uric acid in a production process of a processed food.
The food composition having xanthine oxidase activity is as described above. The heating temperature, heating time, and pH after addition of the food composition having xanthine oxidase activity are as described above.
In addition, a method of lowering a purine content according to an embodiment of the present invention may be a method of lowering the content of purines by adding a food composition having xanthine oxidase activity, and a food composition having uricase activity to convert xanthine into uric acid and further to convert uric acid into allantoin in a production process of a processed food.
The food composition having uricase activity is as described above. The heating temperature, heating time, and pH after addition of the food composition having uricase activity are as described above.
In the method of lowering a purine content according to an embodiment of the present invention, the processed food whose purine content is to be lowered is not particularly limited and is as described above. However, a beer-taste beverage is preferred because it is made using purine-rich raw materials (in particular, malt).

The method of lowering a purine content according to an embodiment of the present invention can effectively lower the purine content also in a purine-rich processed food like a beer-taste beverage.

## Examples

Hereinafter, the present invention will be described in more detail by examples, but the present invention is not limited by these examples. The xanthine content, the uric acid content, and the xanthine oxidase activity value of the food composition are values measured in accordance with the methods described above.

### Examples A1 to A3 and Comparative Example A1

Each sample of Examples A1 to A3 was prepared by weighing 10 g of a commercially available beer with a xanthine content and a uric acid content listed in Table 1, adding a purine-lowering agent for food, which is a food composition having xanthine oxidase activity, in an amount corresponding to a xanthine oxidase activity value listed in Table 1, thoroughly stirring the mixture, and allowing the mixture to stand undisturbed at 65°C for 120 minutes.
In addition, a sample of Comparative Example A1 was prepared by allowing the commercially available beer to stand undisturbed at 65°C for 120 minutes without adding the purine-lowering agent for food.
The xanthine content and uric acid content of these samples were measured, and the results are listed in Table 1.

[Table 1]

Table 1

| | | | Comparative Example A1 | Example A1 | Example A2 | Example A3 |
|---|---|---|---|---|---|---|
| Type of processed food | | - | Beer | Beer | Beer | Beer |
| Before preparation | Xanthine content | μg/g | 14.4 | 14.4 | 14.4 | 14.4 |
| | Uric acid content | μg/g | 0.0 | 0.0 | 0.0 | 0.0 |
| Xanthine oxidase activity value of added purine-lowering agent | | U/10 g | 0 | 1 | 10 | 100 |
| After preparation | Xanthine content | μg/g | 14.4 | 14.3 | 13.1 | 0.4 |
| | Reduction percentage of xanthine | % | 0 | 0.52 | 8.87 | 96.88 |
| | Uric acid content | μg/g | 0 | 0.2 | 1.8 | 18.3 |

According to Table 1, in Examples A1 to A3, the samples were prepared by adding the purine-lowering agent for food, which is a food composition having a xanthine oxidase activity value, and xanthine was reduced, while uric acid was produced in these samples.

### Example B1 and Comparative Example B1

A sample of Example B 1 was prepared by weighing 10 g of a commercially available soy milk beverage with a xanthine content and a uric acid content listed in Table 2, adding a purine-lowering agent for food, which is a food composition having xanthine oxidase activity, in an amount corresponding to a xanthine oxidase activity value listed in Table 2, thoroughly stirring the mixture, and allowing the mixture to stand at 65°C for 120 minutes.
In addition, a sample of Comparative Example B 1 was prepared by allowing the commercially available soy milk beverage to stand undisturbed at 65°C for 120 minutes without adding the purine-lowering agent for food.
The xanthine content and uric acid content of these samples were measured, and the results are listed in Table 2.

[Table 2]

Table 2

| | | | Comparative Example B1 | Example B1 |
|---|---|---|---|---|
| Type of processed food | | - | Soy milk beverage | Soy milk beverage |
| Before preparation | Xanthine content | μg/g | 1.0 | 1.0 |
| | Uric acid content | μg/g | 0.0 | 0.0 |
| Xanthine oxidase activity value of added purine-lowering agent | | U/10 g | 0 | 100 |
| After preparation | Xanthine content | μg/g | 1.0 | 0 |
| | Reduction percentage of xanthine | % | 0 | 100.00 |
| | Uric acid content | μg/g | 0 | 1.2 |

According to Table 2, adding the purine-lowering agent for food, which is a food composition having a xanthine oxidase activity value, lowered xanthine content and allowed production of uric acid also in the soy milk beverage.

Example C1 and Comparative Examples C1

A test solution was prepared by dissolving 8 g of a commercially available Wafu Dashi no Moto (powdered Japanese soup stock) in 200 mL of water.

Then, each sample of Example C1 was prepared by adding a purine-lowering agent for food, which is a food composition having xanthine oxidase activity, in an amount corresponding to a xanthine oxidase activity value listed in Table 3, to 10 g of the test solution (the xanthine content and the uric acid content were as listed in Table 3), thoroughly stirring the mixture, and allowing the mixture to stand undisturbed at 65°C for 120 minutes.

In addition, a sample of Comparative Example C1 was prepared by allowing the test solution of the commercially available Wafu Dashi no Moto to stand undisturbed at 65°C for 120 minutes without adding the purine-lowering agent for food.

The xanthine content and uric acid content of these samples were measured, and the results are listed in Table 3.

[Table 3]

Table 3

| | | | Comparative Example C1 | Example C1 |
|---|---|---|---|---|
| Type of processed food | | - | Wafu dashi no moto | Wafu dashi no moto |
| Before preparation | Xanthine content | μg/g | 1.0 | 1.0 |
| | Uric acid content | μg/g | 0 | 0 |
| Xanthine oxidase activity value of added purine-lowering agent | | U/10 g | 0 | 100 |
| After preparation | Xanthine content | μg/g | 1.0 | 0 |
| | Reduction percentage of xanthine | % | 0 | 100.00 |
| | Uric acid content | μg/g | 0 | 7.8 |

According to Table 3, adding the purine-lowering agent for food, which is a food composition having a xanthine oxidase activity value, lowered xanthine content and allowed production of uric acid also in the Wafu Dashi no Moto, which is a solid processed food.

Beverage treated with xanthine oxidase and uricase

Comparative Example D1

Crushed barley malt was fed in a preparation tank containing 40 L of warm water kept at 40 to 55°C, then the temperature was raised to 78°C while the temperature was repeatedly raised and kept in a stepwise manner, then malt dregs were removed by filtration, and a saccharified liquid was produced. Then, hops was further added to the saccharified liquid, the mixture was boiled and subjected to solid-liquid separation, and a clear wort was produced. Then, brewer's yeast (bottom-fermenting yeast) was added to a pre-fermentation liquid produced by cooling the wort to perform alcoholic fermentation to give an alcoholic strength of 5 v/v%. Then, the yeast was removed by filtration, and a beer-taste beverage (d-0) with a malt ratio of 100 mass% and an original wort extract concentration of 12.5 mass% was produced.

Example D1

To 1 mL of the beer-taste beverage (d-0) produced in the same manner as in Comparative Example D1, 10 μL of a food composition with a xanthine oxidase activity of 100 U/mL was added, the mixture was thoroughly stirred and allowed to stand undisturbed at 40°C for 120 minutes to perform xanthine oxidase treatment, and a beer-taste beverage (d-1) was produced.

Example D2

To 1 mL of the beer-taste beverage (d-1) produced in the same manner as in Example D1, 10 μL of a food composition with a uricase activity of 100 U/mL was added, the mixture was thoroughly stirred and allowed to stand undisturbed at 40°C for 120 minutes to perform uricase treatment, and a beer-taste beverage (d-2) was produced.

The produced beer-taste beverages (d-0) to (d-2) were measured for the contents of xanthine, uric acid, and allantoin. The measurement results are listed in Table 4.

[Table 4]

Table 4

| | | Comparative Example D1 | Example D1 | Example D2 |
|---|---|---|---|---|
| Beer-taste beverage | | (d-0) | (d-1) | (d-2) |
| Purine nucleosidase treatment (• yes, - no) | | - | - | - |
| Xanthine oxidase treatment (• yes, - no) | | - | • | • |
| Uricase treatment (• yes, - no) | | - | - | • |
| Malt ratio | mass% | 100 | 100 | 100 |
| Original wort extract concentration | mass% | 12.5 | 12.5 | 12.5 |
| Content of xanthine | μg/g | 18.2 | < 1.0 | < 1.0 |
| Content of uric acid | μg/g | < 1.0 | 21.6 | < 1.0 |
| Content of allantoin | μg/g | < 1.0 | < 1.0 | 28.4 |
| Alcoholic strength | v/v % | 5.00 | 5.00 | 5.00 |
| Proline content | mg/100 mL | 42 | 42 | 42 |
| Malt ratio (mass%) x original wort extract concentration (mass%) | | 1250 | 1250 | 1250 |

A comparison of Example D1 with Comparative Example D1 in Table 4 shows that the xanthine oxidase treatment lowered the xanthine content and allowed production of uric acid. In addition, a comparison of Example D1 with Example D2 shows that the uricase treatment lowered uric acid content and produced allantoin.

This confirmed that addition of a food composition having xanthine oxidase activity is effective in lowering the content of xanthine. This also confirmed that addition of a food composition having uricase activity is effective in lowering uric acid content.

Effect of pH and temperature on xanthine oxidase activity and uricase activity Examples E1 to E18

To 1 mL each of test solutions listed in Table 5, 10 μL of a food composition with a xanthine oxidase activity of 100 U/mL and 10 μL of a food composition with a uricase activity of 100 U/mL were simultaneously added, and the mixture was allowed to stand undisturbed at the temperature listed in Table 5 for 16 hours. The xanthine concentration and uric acid concentration of the test solution after standing for 16 hours were measured, and each reduction percentage was calculated from the following equation.

·[Reduction percentage (%)] = 100 - [xanthine concentration or uric acid concentration (mg/100 mL) of test solution after standing for 16 hours]/[xanthine concentration or uric acid concentration of test solution before addition of addictive] x 100

The test solutions A to H listed in Table 5 used in examples are as follows.

- · Test solution A: a solution prepared by adding xanthine and uric acid to a 0.1 M acetate buffer solution, which is a base solution, to give a xanthine concentration of 2.05 mg/100 mL, a uric acid concentration of 1.86 mg/100 mL, and a pH of 3.5.
- · Test solution B: a solution prepared by adding xanthine and uric acid to a 0.1 M acetate buffer solution, which is a base solution, to give a xanthine concentration of 1.79 mg/100 mL, a uric acid concentration of 1.73 mg/100 mL, and a pH of 4.0.
- · Test solution C: a solution prepared by adding xanthine and uric acid to a 0.1 M acetate buffer solution, which is a base solution, to give a xanthine concentration of 1.68 mg/100 mL, a uric acid concentration of 1.77 mg/100 mL, and a pH of 4.5.
- · Test solution D: a solution prepared by adding xanthine and uric acid to a 0.1 M acetate buffer solution, which is a base solution, to give a xanthine concentration of 1.89 mg/100 mL, a uric acid concentration of 1.74 mg/100 mL, and a pH of 5.5.
- · Test solution E: a solution prepared by adding xanthine and uric acid to a 0.1 M phosphate buffer solution, which is a base solution, to give a xanthine concentration of 1.87 mg/100 mL, a uric acid concentration of 1.73 mg/100 mL, and a pH of 6.0.
- · Test solution F: a solution prepared by using, as a base solution, a fermented malt beverage (19°C) with a malt ratio of 51 mass% produced based on an ordinary method using malt, sucrose, and hops as raw materials, and adding xanthine and uric acid to the base solution to give a xanthine concentration of 0.72 mg/100 mL, a uric acid concentration of 1.02 mg/100 mL, and a pH of 4.0.
- · Test solution G: a solution prepared by using, as a base solution, a fermented malt beverage (19°C) with a malt ratio of 51 mass% produced based on an ordinary method using malt, sucrose, and hops as raw materials, and adding xanthine and uric acid to the base solution to give a xanthine concentration of 0.82 mg/100 mL, a uric acid concentration of 1.18 mg/100 mL, and a pH of 4.5.
- · Test solution H: a solution prepared by using, as a base solution, a pre-fermentation wort (19°C) with a malt ratio of 51 mass% produced based on an ordinary method using malt and sucrose as raw materials, and adding xanthine and uric acid to the base solution to give a xanthine concentration of 0.17 mg/100 mL, a uric acid concentration of 0.60 mg/100 mL, and a pH of 5.5.

[Table 5]

Table 5

| | Test solution | Base solution | Test solution pH | Temperature (°C) | Xanthine concentration | | | Uric acid concentration | | |
|---|---|---|---|---|---|---|---|---|---|---|
| | | | | | Before adding enzymes (mg/100 mL) | After standing for 16 hours (mg/100 mL) | Reduction percentage (%) | Before adding enzymes (mg/100 mL) | After standing for 16 hours (mg/100 mL) | Reduction percentage (%) |
| Example E1 | A | 0.1 M Acetate buffer solution | 3.5 | 10 | 2.05 | 0.00 | 100.0 | 1.86 | 0.71 | 61.9 |
| Example E2 | | | | 20 | 2.05 | 0.00 | 100.0 | 1.86 | 0.09 | 95.0 |
| Example E3 | B | 0.1 M Acetate buffer solution | 4.0 | 10 | 1.79 | 0.00 | 100.0 | 1.73 | 0.14 | 92.0 |
| Example E4 | | | | 20 | 1.79 | 0.00 | 100.0 | 1.73 | 0.02 | 98.8 |
| Example E5 | C | 0.1 M Acetate buffer solution | 4.5 | 10 | 1.68 | 0.00 | 100.0 | 1.77 | 0.02 | 98.8 |
| Example E6 | | | | 20 | 1.68 | 0.00 | 100.0 | 1.77 | 0.02 | 98.8 |
| Example E7 | | | | 40 | 1.68 | 0.00 | 100.0 | 1.77 | 0.02 | 99.0 |
| Example E8 | | | | 60 | 1.68 | 0.00 | 100.0 | 1.77 | 0.02 | 98.9 |
| Example E9 | | | | 80 | 1.68 | 0.00 | 100.0 | 1.77 | 1.39 | 21.3 |
| Example E10 | D | 0.1 M Acetate buffer solution | 5.5 | 40 | 1.89 | 0.00 | 100.0 | 1.74 | 0.03 | 98.3 |
| Example E11 | | | | 60 | 1.89 | 0.00 | 100.0 | 1.74 | 0.03 | 98.1 |
| Example E12 | | | | 80 | 1.89 | 0.00 | 100.0 | 1.74 | 0.62 | 64.1 |

(continued)

| | Test solution | Base solution | Test solution pH | Temperature (°C) | Xanthine concentration | | | Uric acid concentration | | |
|---|---|---|---|---|---|---|---|---|---|---|
| | | | | | Before adding enzymes (mg/100 mL) | After standing for 16 hours (mg/100 mL) | Reduction percentage (%) | Before adding enzymes (mg/100 mL) | After standing for 16 hours (mg/100 mL) | Reduction percentage (%) |
| Example E13 | E | 0.1 M Phosphate buffer solution | 6.0 | 40 | 1.87 | 0.00 | 100.0 | 1.73 | 0.04 | 97.9 |
| Example E14 | | | | 60 | 1.87 | 0.00 | 100.0 | 1.73 | 0.02 | 98.6 |
| Example E15 | | | | 80 | 1.87 | 0.00 | 100.0 | 1.73 | 0.38 | 78.2 |
| Example E16 | F | Fermented malt beverage with 51 mass% malt (19°C) | 4.0 | 20 | 0.72 | 0.00 | 100.0 | 1.02 | 0.06 | 94.4 |
| Example E17 | G | Fermented malt beverage with 51 mass% malt (19°C) | 4.5 | 20 | 0.82 | 0.00 | 99.8 | 1.18 | 0.03 | 97.4 |
| Example E18 | H | Pre-fermentation wort (19°C) | 5.5 | 60 | 0.17 | 0.01 | 96.0 | 0.60 | 0.00 | 99.9 |

The results listed in Table 5 confirmed that xanthine oxidase activity and uricase activity were expressed, and xanthine and uric acid were degraded at every pH and temperature in test solutions A to H.

Beer-taste beverage with lowered purine content

Examples F-1-1 to F-4-3 and Comparative Examples F-1-1 to F-4-3

Crushed barley malt and as necessary sucrose to give a malt ratio listed in Table 6 were fed as raw materials in a preparation tank containing 40 L of warm water kept at 40 to 55°C, then the temperature was raised to 78°C while stepwisely raising and keeping the temperature was repeatedly performed, then malt dregs were removed by filtration, and a saccharified liquid was obtained. Then, hops was further added to the saccharified liquid, the mixture was boiled and subjected to solid-liquid separation, and a clear wort was produced. Then, in examples and comparative examples except Comparative Example F-1-1, the wort was cooled and subjected to (1) purine nucleosidase treatment shown below, and the treated wort was used as a pre-fermentation liquid. In Comparative Example F-1-1, the wort was cooled, and the cooled wort was used as a pre-fermentation liquid. Then, brewer's yeast (bottom-fermenting yeast) was added to the pre-fermentation liquid to perform alcoholic fermentation, the yeast was removed by filtration, and a fermented solution was obtained.
In addition, in the case of performing xanthine oxidase treatment and uricase treatment, the resulting fermented solution was subjected to (2) xanthine oxidase treatment shown below and (3) uricase treatment shown below in this order.

(1) Purine nucleosidase treatment

To 100 mL of the pre-fermentation liquid, 130 μL of a food composition with a purine nucleosidase activity of 160 U/mL was added, and the mixture was allowed to stand undisturbed at 50°C for 2 hours.

(2) Xanthine oxidase treatment

To 100 mL of the fermented solution, 1000 μL of a food composition with a xanthine oxidase activity of 100 U/mL was added, and the mixture was allowed to stand undisturbed at 40°C for 16 hours.

(3) Uricase treatment

To 100 mL of the fermented solution, 1000 μL of a food composition with a uricase activity of 100 U/mL was added, and the mixture was allowed to stand undisturbed at 40°C for 16 hours.
For the resulting beer-taste beverages, the various contents, malt ratio, original wort extract concentration, alcoholic strength, and content of proline are listed in Table 6. In addition, sensory evaluation of the presence or absence of the taste typical of a beer-taste beverage was performed as follows.

Sensory evaluation

Five panelists who had been regularly trained evaluated the beverages obtained in examples and comparative examples cooled to approximately 4°C for the "presence or absence of the taste typical of a beer-taste beverage" of each beverage for testing by a score in a range of 5.0 (maximum value) to 1.0 (minimum value) in increments of 0.1 based on the score criteria described below, and average values of the scores of the five panelists were calculated. The results are listed in Table 3.
In the evaluation, samples that meet the following criteria "5.0", "4.0", "3.0", "2.0", and "1.0" were prepared in advance to standardize the criteria among the panelists. In addition, for the same beverage, no difference in a score value of 2.0 or more was observed between panelists.
Score criteria for presence or absence of taste typical of beer-taste beverage

- "5.0": The taste typical of a beer-taste beverage is very strongly perceived.
- "4.0": The taste typical of a beer-taste beverage is sufficiently perceived.
- "3.0": The taste typical of a beer-taste beverage is perceived.
- "2.0": The taste typical of a beer-taste beverage is hardly perceived.
- "1.0": The taste typical of a beer-taste beverage is not perceived at all.

[Table 6]

Table 6

| | Comparative Example F-1-1 | Comparative Example F-1-2 | Example F-1-1 | Comparative Example F-1-3 | Comparative Example F-1-4 | Example F-1-2 | Comparative Example F-2-1 | Example F-2-1 | Comparative Example F-2-2 | Example F-2-2 | |
|---|---|---|---|---|---|---|---|---|---|---|---|
| (1) Purine nucleosidase treatment (• yes, - no) | - | • | • | - | • | • | • | • | • | • | |
| (2) Xanthine oxidase treatment (• yes, - no) | - | - | • | - | - | * | - | • | - | • | |
| (3) Uricase treatment (• yes, - no) | | - | - | • | - | - | • | - | • | - | • |
| Malt ratio | mass% | 100 | 100 | 100 | 100 | 100 | 100 | 75 | 75 | 75 | 75 |
| Original wort extract concentration | mass% | 11 | 11 | 11 | 17 | 17 | 17 | 11 | 11 | 17 | 17 |
| Total content of adenine and guanine | μg/g | 30.1 | 18.0 | 10.6 | 46.6 | 27.8 | 16.4 | 11.8 | 5.9 | 18.3 | 9.0 |
| Content of xanthine | μg/g | 6.1 | 17.0 | < 1.0 | 9.4 | 26.3 | < 1.0 | 12.9 | < 1.0 | 20.0 | < 1.0 |
| Content of uric acid | μg/g | < 1.0 | < 1.0 | < 1.0 | < 1.0 | < 1.0 | < 1.0 | < 1.0 | < 1.0 | < 1.0 | < 1.0 |
| Content of allantoin | μg/g | < 1.0 | < 1.0 | 5.7 | < 1.0 | < 1.0 | 8.8 | < 1.0 | 4.0 | < 1.0 | 6.1 |
| Content of total purines | μg/g | 38.7 | 42.3 | 11.2 | 59.9 | 65.4 | 17.3 | 28.2 | 6.1 | 43.5 | 9.4 |
| Alcoholic strength | v/v % | 5.45 | 5.56 | 5.56 | 8.43 | 8.60 | 8.60 | 6.17 | 6.17 | 9.54 | 9.54 |
| Proline content | mg/ 100 mL | 31 | 54 | 54 | 47 | 83 | 83 | 36 | 36 | 56 | 56 |

(continued)

| | | | | | | | | | | | |
|---|---|---|---|---|---|---|---|---|---|---|---|
| | Comparative Example F-1-1 | Comparative Example F-1-2 | Example F-1-1 | Comparative Example F-1-3 | Comparative Example F-1-4 | Example F-1-2 | Comparative Example F-2-1 | Example F-2-1 | Comparative Example F-2-2 | Example F-2-2 | |
| Malt ratio (mass%) x original wort extract concentration (mass%) | | 1100 | 1100 | 1100 | 1700 | 1700 | 1700 | 825 | 825 | 1275 | 1275 |
| Sensory evaluation: presence or absence of taste typical of a beer-taste beverage | | 4.1 | 4.0 | 4.0 | 4.5 | 4.4 | 4.4 | 3.8 | 3.8 | 4.2 | 4.2 |
| | | | | | | | | | | | |
| | | Comparative Example F-3-1 | Example F-3-1 | Comparative Example F-3-2 | Example F-3-2 | Comparative Example F-4-1 | Example F-4-1 | Comparative Example F-4-2 | Example F-4-2 | Comparative Example F-4-3 | Example F-4-3 |
| (1) Nucleosidase treatment (• yes, - no) | | • | • | • | • | • | • | • | • | • | • |
| (2) Xanthine oxidase treatment (• yes, - no) | | - | • | - | • | - | • | - | • | - | • |
| (3) Uricase treatment (• yes, - no) | | - | • | - | • | - | • | - | • | - | • |
| Malt ratio | mass% | 51 | 51 | 51 | 51 | 24 | 24 | 24 | 24 | 24 | 24 |
| Original wort extract concentration | mass% | 11 | 11 | 17 | 17 | 8.78 | 8.78 | 11 | 11 | 17 | 17 |
| Total content of adenine and guanine | μg/g | 8.7 | 3.6 | 13.4 | 5.5 | 2.1 | 2.1 | 1.0 | 1.2 | 1.6 | 1.9 |
| Content of xanthine | μg/g | 7.8 | < 1.0 | 12.0 | < 1.0 | 3.5 | < 1.0 | 2.3 | < 1.0 | 3.6 | < 1.0 |
| Content of uric acid | μg/g | < 1.0 | < 1.0 | < 1.0 | < 1.0 | < 1.0 | < 1.0 | < 1.0 | < 1.0 | < 1.0 | < 1.0 |
| Content of allantoin | μg/g | < 1.0 | 1.6 | < 1.0 | 2.4 | < 1.0 | 19.0 | < 1.0 | 1.1 | < 1.0 | 1.7 |

(continued)

| | | Comparative Example F-3-1 | Example F-3-1 | Comparative Example F-3-2 | Example F-3-2 | Comparative Example F-4-1 | Example F-4-1 | Comparative Example F-4-2 | Example F-4-2 | Comparative Example F-4-3 | Example F-4-3 |
|---|---|---|---|---|---|---|---|---|---|---|---|
| Content of total purines | μg/g | 18.8 | 3.8 | 29.1 | 5.8 | 4.7 | < 1.0 | 3.4 | 1.2 | 5.3 | 1.9 |
| Alcoholic strength | v/v % | 6.86 | 6.86 | 10.60 | 10.60 | 4.00 | 4.00 | 6.60 | 6.60 | 10.20 | 10.20 |
| Proline content | mg/ 100 mL | 28 | 28 | 43 | 43 | 12 | 12 | 3 | 3 | 5 | 5 |
| Malt ratio (mass%) x original wort extract concentration (mass%) | | 561 | 561 | 867 | 867 | 210.7 | 210.7 | 264 | 264 | 408 | 408 |
| Sensory evaluation: presence or absence of taste typical of a beer-taste beverage | | 3.5 | 3.5 | 3.8 | 3.8 | 3.1 | 3.1 | 3.2 | 3.2 | 3.5 | 3.5 |

As can be seen from Table 6, the results show that xanthine was degraded and the content of purines was lowered in the beer-taste beverages prepared in examples, and a taste typical of a beer-taste beverage was also perceived.

Content of aroma components depending on difference in method of lowering purine content Preparation Example G0

Crushed barley malt and as necessary sucrose to give a malt ratio listed in Table 7 were fed as raw materials in a preparation tank containing 40 L of warm water kept at 40 to 55°C, then the temperature was raised to 78°C while stepwisely raising and keeping the temperature was repeatedly performed, then malt dregs were removed by filtration, and a saccharified liquid was obtained. Then, hops was further added to the saccharified liquid, the mixture was boiled and subjected to solid-liquid separation, and a clear wort was produced. The wort was cooled, and then to 100 mL of the cooled wort, 130 μL of an additive for processed food with a purine nucleosidase activity of 160 U/mL was added, and the mixture was allowed to stand undisturbed at 50°C for 2 hours to perform purine nucleosidase treatment, and a pre-fermentation liquid was obtained. Then, brewer's yeast (bottom-fermenting yeast) was added to the pre-fermentation liquid to perform alcoholic fermentation, the yeast was removed by filtration, and a fermented solution (g-0) was obtained.

Example G1

To 100 mL of the fermented solution (g-0) obtained in Preparation Example G0, 1000 μL of a food composition with a xanthine oxidase activity of 100 U/mL was added, and the mixture was allowed to stand undisturbed at 40°C for 16 hours to perform xanthine oxidase treatment. Then, to 100 mL of the fermented solution treated with xanthine oxidase, 1000 μL of a food composition with a uricase activity of 100 U/mL was added, the mixture was allowed to stand undisturbed at 40°C for 16 hours to perform uricase treatment, and a beer-taste beverage (g-1) was obtained.

Comparative Example G1

To 100 mL of the fermented solution (g-0) obtained in Preparation Example G0, activated clay was added to give a concentration of 3000 mass ppm, and the mixture was gently stirred to make the activated clay uniform in the solution. The solution was then allowed to stand undisturbed for 1 hour to bring the solution into contact with the activated clay. After the contact for 1 hour, the activated clay was removed by filtration, and a beer-taste beverage (g-i) was obtained.

Comparative Example G2

To 100 mL of the fermented solution (g-0) obtained in Preparation Example G0, activated carbon was added to give a concentration of 3000 mass ppm, and the mixture was gently stirred to make the activated carbon uniform in the solution. The solution was then allowed to stand undisturbed for 1 hour to bring the solution into contact with the activated carbon. After the contact for 1 hour, the activated carbon was removed by filtration, and a beer-taste beverage (g-ii) was obtained.
The fermented solution (g-0), and the beer-taste beverages (g-1), (g-i), and (g-ii) thus prepared were measured for various properties listed in Table 7, and the results listed in Table 7 were obtained.

[Table 7]

Table 7

| | Preparation Example G0 | Example G1 | Comparative Example G1 | Comparative Example G2 |
|---|---|---|---|---|
| Fermented solution/beer-taste beverage | (g-0) | (g-1) | (g-i) | (g-ii) |
| Method of lowering purine content | Purine nucleosidase | Purine nucleosidase + xanthine oxidase + uricase | Purine nucleosidase + physical contact with activated clay | Purine nucleosidase + physical contact with activated carbon |

(continued)

| | | Preparation Example G0 | Example G1 | Comparative Example G1 | Comparative Example G2 |
|---|---|---|---|---|---|
| Original wort extract concentration | mass% | 14.5 | 14.5 | 14.5 | 14.5 |
| Apparent extract concentration | mass% | 2.2 | 2.2 | 2.1 | 2.2 |
| Apparent fermentation degree | % | 85 | 85 | 85 | 85 |
| Alcoholic strength | v/v % | 6.6 | 6.6 | 6.6 | 6.6 |
| pH | - | 3.50 | 3.50 | 3.47 | 3.55 |
| Chromaticity | EBC | 19.4 | 19.4 | 14.5 | 18.7 |
| Bitterness value | BUs | 36.4 | 36.4 | 27.8 | 33.2 |
| FAN | mg/100 mL | 4.1 | 4.1 | 3.5 | 4.1 |
| (1) Content of ethyl butyrate | mass ppb | 41 | 41 | 41 | 27 |
| (2) Content of ethyl caproate | mass ppb | 143 | 143 | 134 | 50 |
| (3) Content of ethyl octanoate | mass ppb | 426 | 426 | 278 | 94 |
| (4) Content of ethyl decanoate | mass ppb | 87 | 87 | 36 | 8 |
| Total content of esters of (1) to (4) | mass ppb | 696 | 696 | 490 | 179 |
| Content of phenethyl alcohol | mass ppm | 27.3 | 27.3 | 27.3 | 17.4 |
| Content of iso-$\alpha$-acid | mass ppm | 33.63 | 33.63 | 24.13 | 31.01 |
| Content of $\alpha$-acid | mass ppm | 1.51 | 1.51 | 0.67 | 0.79 |
| Content of xanthine | $\mu$g/g | 9.7 | < 1.0 | < 1.0 | 8.2 |
| Total content of adenine and guanine | $\mu$g/g | 5.28 | 5.28 | 4.78 | 5.18 |
| Content of purines | $\mu$g/g | 15.84 | 6.14 | 5.68 | 14.05 |

From the results listed in Table 7, it is confirmed that the beer-taste beverage (g-1) prepared in Example G1

had lowered content of purines while aroma components (such as ester components and an alcohol component) peculiar to beer were retained. On the other hand, in the beer-taste beverages (g-i) and (g-ii) prepared in Comparative Examples G1 and G2, the content of purines was lowered, but decreases in aroma components, such as ester components and an alcohol component, were observed compared with the fermented solution (g-0) prepared in Preparation Example G0.

**Claims**

**1.** A method of producing a processed food, the method comprising:

(a) adding a food composition having xanthine oxidase activity to a raw material containing purines.

**2.** The method of producing a processed food according to claim 1, wherein the food composition has a xanthine oxidase activity value of 0.1 U or more.

**3.** The method of producing a processed food according to claim 1 or 2, further comprising:
(a1) adding a food composition having uricase activity, simultaneously with step (a) and/or after step (a).

**4.** The method of producing a processed food according to any one of claims 1 to 3, wherein the food composition is a purine-lowering agent for food.

**5.** The method of producing a processed food according to any one of claims 1 to 4, wherein the processed food has a xanthine oxidase activity of 0.1 U or more.

**6.** The method of producing a processed food according to any one of claims 1 to 5, wherein the processed food is a beverage.

**7.** The method of producing a processed food according to any one of claims 1 to 5, wherein

the processed food is a beer-taste beverage,
the method comprises:

(1) performing at least one treatment of saccharification treatment, boiling treatment, or solid content removal treatment on a raw material to produce a pre-fermentation liquid;
(2) cooling the pre-fermentation liquid produced in step (1) to produce a cooled pre-fermentation liquid; and
(3) adding yeast to the cooled pre-fermentation liquid produced in step (2) to perform alcoholic fermentation;

and wherein step (a) is performed at least: before step (1); simultaneously with one or more steps of steps (1) to (3); between two steps selected from steps (1) to (3); or after step (3).

**8.** A processed food produced by the production method described in any one of claims 1 to 7.

**9.** A food composition having a xanthine oxidase activity of 0.1 U or more.

**10.** A food composition having at least one of xanthine oxidase activity or uricase activity.

**11.** The food composition according to claim 9 or 10, wherein the food composition is a purine-lowering agent for food.

**12.** The food composition according to any one of claims 9 to 11, wherein the food composition is for use in production of a processed food.

**13.** The food composition according to any one of claims 9 to 12, wherein the food composition is for use in production of a uric acid-containing processed food.

**14.** A method of use, comprising applying the food composition described in any one of claims 9 to 13 in production of a uric acid-containing processed food.

**15.** A method of lowering a purine content in a processed food, the method comprising adding a food composition having

xanthine oxidase activity to convert xanthine into uric acid, thereby lowering a content of purines, in a production process of a processed food.

**16.** A method of lowering a purine content in a processed food, the method comprising adding a food composition having xanthine oxidase activity and a food composition having uricase activity to convert xanthine into uric acid and further convert uric acid into allantoin, thereby lowering a content of purines, in a production process of a processed food.

## INTERNATIONAL SEARCH REPORT

International application No.
**PCT/JP2022/026326**

**A. CLASSIFICATION OF SUBJECT MATTER**

***C12C 5/02***(2006.01)i; ***C12C 11/11***(2019.01)i; ***C12G 3/04***(2019.01)i; ***A23L 11/65***(2021.01)i; ***A23L 2/52***(2006.01)i; ***A23L 5/00***(2016.01)i
FI: A23L5/00 K; C12G3/04; C12C11/11; A23L5/00 Z; A23L11/65; A23L2/00 F; A23L2/52; C12C5/02

According to International Patent Classification (IPC) or to both national classification and IPC

**B. FIELDS SEARCHED**

Minimum documentation searched (classification system followed by classification symbols)

A23L5/00; A23L2/52; A23L11/65; C12C5/02; C12C11/11; C12G3/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| X | CN 109554376 A (GUANGXI UNIVERSITY) 02 April 2019 (2019-04-02) example 6 | 10, 12-14 |
| Y | example 6 | 3 |
| A | example 6 | 1-2, 4-9, 15-16 |
| X | JP 9-172962 A (YOTSUBA NYUGYO KK) 08 July 1997 (1997-07-08) paragraph [0002], example 2 | 9-10, 12 |
| Y | paragraph [0002], example 2 | 1-8, 13-14 |
| A | paragraph [0002], example 2 | 11, 15-16 |
| Y | JP 2014-12646 A (KATAYAMA CHEM WORKS CO LTD) 23 January 2014 (2014-01-23) paragraphs [0008], [0037] | 1-8, 13-14 |
| Y | JP 3824326 B2 (SUNTORY LIMITED) 20 September 2006 (2006-09-20) pp. 3-4 | 1-16 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 September 2022** | **20 September 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

INTERNATIONAL SEARCH REPORT

International application No.
**PCT/JP2022/026326**

**C. DOCUMENTS CONSIDERED TO BE RELEVANT**

| Category* | Citation of document, with indication, where appropriate, of the relevant passages | Relevant to claim No. |
|---|---|---|
| Y | 歯科医学大事典, 藤田勝治, 10 October 1989, p. 1932, item "Uric Acid" lines 1-9, (Illustrated Encyclopedia and Dictionary of Dental Science), non-official translation (FUJITA, Shoji) | 1-16 |

Form PCT/ISA/210 (second sheet) (January 2015)

**INTERNATIONAL SEARCH REPORT**
**Information on patent family members**

International application No.
**PCT/JP2022/026326**

| Patent document cited in search report | Publication date (day/month/year) | Patent family member(s) | Publication date (day/month/year) |
|---|---|---|---|
| CN 109554376 A | 02 April 2019 | (Family: none) | |
| JP 9-172962 A | 08 July 1997 | (Family: none) | |
| JP 2014-12646 A | 23 January 2014 | (Family: none) | |
| JP 3824326 B2 | 20 September 2006 | US 6013288 A<br>columns 1-2<br>WO 1996/025483 A1<br>EP 753572 A1<br>CA 2188032 A<br>AT 223478 T<br>DK 753572 T | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018064503 A


### Non-patent literature cited in the description


- Guide to Microanalysis of Purines in Alcoholic Beverages. Japan Food Research Laboratories, August 2015
- BCOJ Beer Analysis Method. The Brewing Society of Japan, 01 November 2004
- Revised BCOJ Beer Analysis Method. Public Interest Incorporated Foundation, The Brewing Society of Japan, 2013
- 8.15 Bitterness Value. Revised BCOJ Beer Analysis Method. Public Interest Incorporated Foundation, The Brewing Society of Japan, 2013
- 8.8 Chromaticity. Revised BCOJ Beer Analysis Method. Public Interest Incorporated Foundation, The Brewing Society of Japan, 2013